# EUROPEAN PATENT APPLICATION

(11) **EP 4 657 042 A1**
(43) Date of publication of application: **03.12.2025**
(21) Application number: 24747217.8
(22) Date of filing: 19.01.2024
(51) Int. Cl.: G01N 1/40, B01D 57/02, G01N 1/10, G01N 27/447

(54) **METHOD AND APPARATUS FOR TREATING A TARGET SUBSTANCE BY ELECTROPHORESIS**

(30) Priority: 23.01.2023 JP 2023008270
(71) Applicant: Provigate Inc., Tokyo 113-0033 (JP)
(72) Inventor: SHINOHARA, Takeshi, Tokyo 113-0033 (JP); HATTORI, Yuko, Tokyo 113-0033 (JP); SEKII, Yoshizumi, Tokyo 113-0033 (JP)
(74) Representative: Michalski Hüttermann & Partner Patentanwälte mbB
(86) International application number: PCT/JP2024/001427
(87) International publication number: WO 2024/157889

(57) **Abstract**

According to an embodiment of the present disclosure, a method of treating a target substance by electrophoresis includes providing a separator that allows passage of a target substance, introducing a first solution containing the target substance to a first side of the separator, introducing a second solution to a second side of the separator, and selectively moving the target substance by electrophoresis from the first solution to the second solution through the separator.

## Description

### TECHNICAL FIELD

The present invention relates to a method and a device of treating a target substance by electrophoresis.

### BACKGROUND ART

A wide variety of techniques of separating a substance in a solution are known.

Electrophoresis is one of such techniques. Various electrophoresis methods have been developed. For example, two-dimensional electrophoresis is a technique of sequentially performing electrophoresis in two directions to separate a target substance and has been widely used in protein analysis. The two-dimensional electrophoresis is typically performed by carrying out isoelectric point electrophoresis using a polyacrylamide gel to separate a target substance in a linear direction (one-dimensional) and carrying out SDS-polyacrylamide gel electrophoresis (SDS-PAGE) in a direction perpendicular to the linear direction to separate the target substance based on the molecular weight thereof (two-dimensional). This technique requires electrophoresis to be performed twice and also requires the area of a two-dimensional gel.

Dialysis is one of the techniques of separating a substance. Various dialysis methods have been developed. For example, discontinuous diafiltration is performed by carrying out concentration using centrifugal ultrafiltration and carrying out dilution with a buffer for buffer exchange. In this manner, the dialysis typically requires a large device, a large amount of solvent (buffer), and a long treatment time (several hours to a whole day). The centrifugal ultrafiltration is likely to cause clogging in filtration and thus is not suitable for crude samples containing a large amount of contaminants.

Since the dialysis is a phenomenon that occurs based on an osmotic pressure, a target substance cannot be concentrated only by performing the dialysis. In order to concentrate a target substance, 50% to 60% of glycerol is mixed with an external liquid. In this manner, water in an internal liquid is discharged to the external liquid. However, glycerol enters and is mixed with the internal liquid where the target substance is present. The concentrated glycerol increases the viscosity of the solution. Therefore, the mixed glycerol can affect the analysis or measurement of the target substance contained in the internal liquid. Further, glycerol is a non-ionic substance and has no electric charge, and thus cannot be separated by electrophoresis.

### SUMMARY OF INVENTION

### TECHNICAL PROBLEM

As can be understood from the examples described above, there is a demand for a simpler and more efficient method of separating a substance.

### SOLUTION TO PROBLEM

According to an embodiment of the present disclosure, there is provided a method of treating a target substance by electrophoresis. According to an embodiment, the method is a method including:
providing a separator that allows passage of a target substance;
introducing a first solution containing the target substance to a first side of the separator;
introducing a second solution to a second side of the separator; and
selectively moving the target substance by electrophoresis from the first solution to the second solution through the separator.

According to an embodiment of the present disclosure, there is provided a device that treats a target substance by electrophoresis. According to an embodiment, the device is a device including:
a first solution chamber (charging chamber);
a second solution chamber (elution chamber) that is adjacent to the first solution chamber (charging chamber); and
a separator that separates the first solution chamber and the second solution chamber from each other, allows a target substance to pass from the first solution chamber to the second solution chamber, and has electrical conductivity,
wherein the first solution chamber is filled with a first solution containing the target substance,
the second solution chamber is filled with a second solution, and
an electric field is applied from outside the first solution chamber and the second solution chamber so that the target substance is allowed to selectively move by electrophoresis from the first solution chamber to the second solution chamber through the separator.

In this manner, for example, the target substance can be easily and efficiently separated by electrophoresis, and the device can also be made compact.

Additional aspects and advantages of the present disclosure will be readily apparent to those skilled in the art based on the following detailed description below, and the present disclosure describes only exemplary embodiments. As will be understood, the present disclosure can describe other different embodiments, and several details thereof can be modified in various obvious points within a range not departing from the scope of the present disclosure. Therefore, the accompanying drawings and the description are basically exemplary and are not intended to limit the present disclosure.

### BRIEF DESCRIPTION OF DRAWINGS

Fig. 1 shows schematic views of an electrophoretic device according to an embodiment.
Fig. 2 shows schematic views of an electrophoretic device according to an embodiment.
Fig. 3 shows schematic views of an electrophoretic device according to an embodiment.
Fig. 4 shows schematic views of an electrophoretic device according to an embodiment.
Fig. 5 shows schematic views of an electrophoretic device according to an embodiment.
Fig. 6 is a graph showing results of concentration ratios according to an example.
Fig. 7 is an electrophoretic gel photograph showing results of an electrophoretic treatment according to an example.
Fig. 8 is an electrophoretic gel photograph showing results of an electrophoretic treatment according to an example.
Fig. 9 is an electrophoretic gel photograph showing results of an electrophoretic treatment according to an example.
Fig. 10 is an electrophoretic gel photograph showing results of an electrophoretic treatment according to an example.
Fig. 11 is an electrophoretic gel photograph showing results of an electrophoretic treatment according to an example.
Fig. 12 is an electrophoretic gel photograph showing results of an electrophoretic treatment according to an example.
Fig. 13 shows graphs of the abundance ratios between albumin and amylase in the above-described examples.
Fig. 14 shows graphs of the relationship between the concentration of a counter substance in an initial eluate and the concentration of albumin in the eluate after an electrophoretic treatment in an example.
Fig. 15 is an electrophoretic gel photograph showing results of an electrophoretic treatment according to an example.
Fig. 16 is an electrophoretic gel photograph showing results of an electrophoretic treatment according to an example.
Fig. 17 is an electrophoretic gel photograph showing results of an electrophoretic treatment according to an example.
Fig. 18 is a schematic view showing an electrophoretic unit according to an example.
Fig. 19 shows schematic views of a pipette cartridge including an electrophoretic unit according to an example.

### DESCRIPTION OF EMBODIMENTS

### <Target substance>

In some embodiments, a target substance may be a substance contained in a target solution of a subject. According to some embodiments of the present disclosure, the target substance can be treated to inspect a subject.

In some embodiments, the subject (subject to be inspected) may include or be human. In some embodiments, the subject may include or be an animal other than human. The subject may include or be a mammal. The subject may be, for example, a working animal, a livestock animal, a pet animal, or a wild animal without limitation. The subject may be a plant or a microorganism.

A sample containing the target substance may be a solution. "Solution" may be a solution derived from the subject. "Solution" may be a body fluid, a solution derived from a body fluid, or a diluent of a body fluid. The solution may be a solution (derived from a non-body fluid) other than a body fluid or a mixed solution of a body fluid or a solution derived from a body fluid and a solution derived from a non-body fluid. The solution may be a disrupted solution, a culture solution, or the like of microorganisms, cells, extracellular vehicles, or the like. The solution may be a solution used for sample measurement or a solution used for calibration measurement. For example, the solution may be a standard solution or a calibration solution. For example, the solution may be a liquid that does not intentionally or deliberately contain a target substance to be measured, to be used for calibration and the like. The sample as a target to be measured may be a specimen. The solution may be a solution containing a chemical substance.

"Body fluid" may be lymphatic fluid, tissue fluid such as interstitial fluid, intercellular fluid, or intercellular lymph, celomic fluid, serous fluid, pleural fluid, ascites fluid, pericardial fluid, cerebrospinal fluid (spinal fluid), joint fluid (synovial fluid), or aqueous humor (hydatoid). The body fluid may be a digestive fluid such as saliva, gastric juice, bile, pancreatic juice, or intestinal juice, or may be sweat, tears, nasal mucus, urine, semen, vaginal fluid, amniotic fluid, or milk. The body fluid may be a body fluid of an animal or a body fluid of human. "Body fluid" may be a solution. The solution may include a physiological buffer such as phosphate buffered saline (PBS) or N-tris(hydroxymethyl)methyl-2-aminoethanesulfonic acid buffer (TES), which contains the target substance. The solution is not particularly limited as long as the solution contains the target substance.

The solution may contain the target substance. The solution may have a possibility of containing the target substance. In some embodiments, the target substance may be a molecule, an ion, a polymer, a biomolecule, or the like. The target substance may include a biomolecule. The target substance may be a biological substance. The target substance may be a protein, a glycated protein, or the like. For example, the solution may be tears, and the target substance may be albumin, glycoalbumin, hemoglobin, or glycohemoglobin contained in tears. Alternatively, the target substance may be albumin, glycoalbumin, hemoglobin, or glycohemoglobin in blood, serum, or plasma, or may be albumin, glycoalbumin, hemoglobin, or glycohemoglobin in intercellular lymph, urine, or saliva. The albumin may be oxidized albumin (HNA) or reduced albumin (HMA). In some embodiments, the target substance may be an advanced glycation end product (AGE). In some embodiments, the target substance may be a glycated lipid.

The term "albumin" used in the present specification does not distinguish between glycated albumin (glycoalbumin) and non-glycated albumin and includes both, and does not distinguish between oxidized albumin and reduced albumin and includes both unless otherwise specified.

The solution containing the target substance may be a crude sample. The term "crude sample" used in the present specification may be a sample derived from a living body considered to include the target substance and denotes a sample that has not been subjected to a procedure of isolation or purification of the target substance. "Crude sample" does not exclude a disrupted solution or a culture solution of microorganisms, cells, extracellular vehicles, or the like.

The term "contaminant" used in the present specification typically denotes a substance that is not the target substance to be recovered. The term "contaminant" is used in the above-described manner regardless of whether the contaminant is an impurity or a contaminated substance unless otherwise specified.

### <Separator>

The term "separator" used in the present specification typically denotes a membrane, a member, or a region that separates two solutions from each other. The separator allows the target substance contained in one solution to pass to the other solution. Alternatively, the separator allows a contaminant contained in one solution to pass to the other solution and prevents the target substance from passing.

The expression "separator separates a solution chamber" or similar expressions used in the present specification denote that the amount of permeation (passage of a solute through the separator) of a solvent or buffer contained in the solution chamber is sufficiently small for dialysis of the target substance (passage of a solvent through the separator) during an operation such as intended separation. This does not indicate that permeation of a small amount of solvent or buffer does not occur at all.

It is preferable that the separator of the present disclosure have electrical conductivity suitable for electrophoresis. A component or material constituting the separator does not necessarily have electrical conductivity. The expression "separator separates a solution chamber" or similar expressions used in the present specification should be interpreted to the extent that the target substance can pass though the separator during electrophoresis.

In some embodiments, the separator may include a gel. Examples of the gel include, but are not limited to, an agarose gel and a polyacrylamide gel (PAGE).

In some embodiments, the separator may include filter paper and cellulose. In some embodiments, the separator may include a resin (such as polytetrafluoroethylene (PTFE)).

In some embodiments, the separator may include a plurality of different substances. In some embodiments, the separator may include filter paper (a cellulose membrane or other membranes) and a gel. For example, the gel may be disposed on an introduction chamber side with respect to filter paper. The filter paper physically supports the gel.

### <Buffer exchange>

In some embodiments, solvents in the solutions on both sides of the separator may be different from each other. In some embodiments, a first buffer in a first solution chamber may be different from a second buffer of a second solution chamber. In this case, buffer exchange is performed on the target substance.

The solvent of a solution may be a buffer. Examples of the buffer include, but not limited to, a tris-glycine buffer, a phosphate buffer, and a sodium barbital buffer.

### <Concentration>

In some embodiments, the volumes of the solution chambers or the volumes of the solutions on both sides of the separator may be different from each other. For example, the volume of the second solution chamber or the amount of the second solution (second buffer) inside the second solution chamber is less than the volume of the first solution chamber or the amount of the first solution (first buffer) inside the first solution chamber. In this manner, the target substance can be concentrated. The entire target substance in the first solution chamber (charging chamber) does not necessarily move to the second solution chamber (elution chamber) by electrophoresis. The volume of the second solution or the second solution chamber or the properties of the second solution or the second solution chamber may be set such that the concentration of the target substance in the second solution after electrophoresis is greater than the initial concentration of the target substance in the first solution.

The term "concentration ratio" used in the present specification is defined as a ratio C1/C0 of a concentration C1 of the target substance in the second solution chamber (elution chamber) after electrophoresis to a concentration C0 of the target substance in the first solution chamber (charging chamber) before electrophoresis.

The concentration of the target substance in the second solution increases during the treatment. With the increase, the osmotic pressure increases from the second solution chamber to the first solution chamber, that is, in an opposite direction. This suggests the presence of a concentration limit. In some embodiments, a substance (counter substance) that moves to the first solution chamber by electrophoresis may be added to the second solution as a solution to this problem. It is preferable that the counter substance have an electric charge opposite to the electric charge of the target substance in the solution. Examples of the counter substance include, but not limited to, biopolymers such as proteins and artificial polymers.

### <Selectivity>

In some embodiments, the separator may have selectivity. That is, the separator may have an ability to pass target molecules and to inhibit, suppress, or block the passage of contaminants or molecules other than the target molecules. For example, the separator may be a semipermeable membrane or a dialysis membrane or may include these membranes. The semipermeable membrane or the dialysis membrane may be selected from cellulose ester, regenerated cellulose, and the like.

For example, the separator may have chemical selectivity. In some embodiments, the separator may allow the passage of contaminants.

In some embodiments, the separator may contain a substance that causes selective electrophoresis (in the present specification, also referred to as "selective substance"). The separator may contain a substance having an ability to purify proteins. The separator may contain a resin for purifying proteins. For example, the separator may be selected from hydroxyapatite, a cation exchange carrier, an anion exchange carrier, and the like. The hydroxyapatite may be any of Type I or Type II. Examples of a hydrophobic resin include a compound containing a butyl group, a phenyl group, a hexyl group, and the like as a functional group. The separator may contain a compound or mixture containing a functional group that shows a plurality of different interactions (ion exchange, hydrophobic bonding, affinity bonding, and the like). The separator may contain a compound used in a mixed mode. These substances suppress, inhibit, or block the passage of contaminants. In this manner, the degree of purification of the target substance can be increased as compared with, for example, a case where the separator contains no resins.

For example, the selective substance may be contained or supported by a gel. For example, the selective substance may be supported on or in the vicinity of the semipermeable membrane. In some embodiments, the selective substance may be disposed in a portion other than the separator. For example, the selective substance may be provided in the first solution or in the first solution chamber. In some embodiments, the selective substance may be mixed with the first solution before the electrophoresis.

### <Plurality of times of electrophoresis>

In some embodiments, the device may be provided with a first solution chamber, a second solution chamber, a third solution chamber, a first separator provided between the first solution chamber and the second solution chamber, and a second separator provided between the second solution chamber and the third solution chamber. An electrode pair may be disposed outside the first solution chamber and the third solution chamber. In some embodiments, the first separator allows passage of the target substance, and the second separator does not allow the passage of the target substance. In some embodiments, the second separator may allow the passage of some contaminants (for example, substances smaller than the target substance) without allowing passage of the target substance. In this manner, the target substance moves from the first solution chamber to the second solution chamber through the first separator and is held in the second solution chamber. Meanwhile, some contaminants are held in the first solution chamber. Further, some other contaminants enter the third solution chamber after passing through the second solution chamber and the second separator. In this manner, for example, the target substance can be further purified. In some embodiments, two or more separators may be used. In some embodiments, three or more solution chambers or solutions may be used.

In some embodiments, the target substance that has been subjected to electrophoretic treatments (separation, buffer exchange, concentration, and the like) may be allowed to move to another place (a recovery chamber, a sensor, a chamber that performs another process, and the like) by further electrophoresis.

In some embodiments, the treated target substance may be allowed to move to a sensor that detects the treated target substance by electrophoresis. For example, the device may further include a sensor. For example, the device may be connected to the sensor. For example, the third solution chamber may be a space where the sensor that detects the target substance is disposed. The present disclosure provides an electrophoretic device, a device, or a system.

In some embodiments, the treated target substance can be detected with a sensing device by introducing a solution containing the target substance to the sensing device and performing electrophoretic treatments (separation, purification, buffer exchange, concentration, and the like). In this manner, for example, the target substance with a low concentration can be detected or measured efficiently and/or with high sensitivity. For example, proteins with a low concentration such as albumin in saliva can be concentrated and purified, and can be further detected or measured with high sensitivity or high precision by using the electrophoretic device, the device, or the system described above.

### <Selectivity using isoelectric point>

In some embodiments, the selectivity for the target substance and the contaminant may occur depending on the pH of a charging liquid. The pH of the charging liquid may be set to be between the isoelectric points of the target substance and the contaminant. For example, in a case where the negatively charged target substance in the charging liquid is attracted to a positive electrode, the pH of the charging liquid is set to be greater than the isoelectric point of the target substance. The surface of the target substance is negatively charged and attracted to a positive electrode. The pH of the charging liquid may be set to be less than the isoelectric point of the target molecules in the charging liquid and to be greater than the isoelectric point of the contaminant. For example, the contaminant may move in a direction opposite to the direction of the target substance. For example, even in a case where the contaminant moves to the same electrode, the movement amount thereof may be set to be sufficiently less than that of the target substance. For example, the contaminant does not need to move. In this manner, the target substance can be purified or separated.

### <Performance of plurality of treatments>

In some embodiments, a plurality of treatments such as buffer exchange, concentration, purification, separation, and the like may be performed at the same time. The plurality of treatments may be selected from the group consisting of buffer exchange, concentration, purification, and separation. The times of the plurality of treatments may or may not overlap with each other. The expression "plurality of treatments are performed at the same time" used in the present specification denotes that a plurality of treatments are performed in the middle of any one one-dimensional electrophoretic treatment unless otherwise specified.

In some embodiments of the present disclosure, performance of two-dimensional or multi-dimensional electrophoresis is not excluded. The electrophoretic treatment according to any one of the embodiments of the present disclosure is performed in any one-dimensional electrophoresis. In some embodiments, a multi-dimensional electrophoretic treatment may be performed.

In some embodiments, a certain electrophoretic treatment may be intermittently performed. For example, the positive and negative electrodes may be switched periodically or irregularly. In this manner, for example, occurrence of problems such as clogging of the separator can be suppressed and/or the electrophoretic treatment can be efficiently or effectively performed. Such switching of the positive and negative electrodes in the electric field direction should be considered as multi-dimensional electrophoresis. In the present disclosure, a series of electrophoretic treatments performed on the same electrode pair is considered to be one-dimensional electrophoresis unless otherwise specified.

### <Embodiments>

Hereinafter, some embodiments will be described with reference to the accompanying drawings.

### <Embodiment 1>

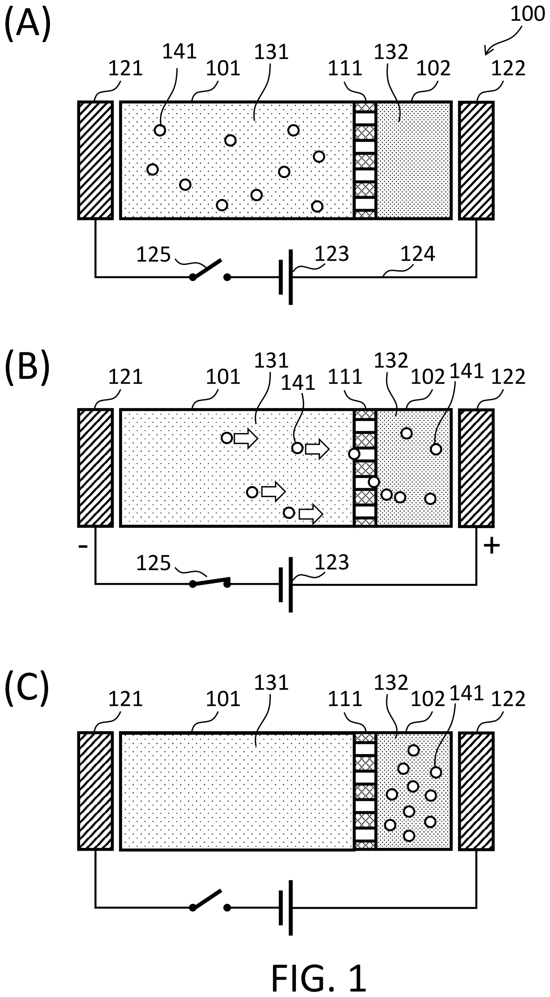

A device 100 according to an embodiment of the present disclosure and the operation thereof will be described with reference to Fig. 1.

As shown in Fig. 1A, the electrophoretic device 100 includes a first solution chamber (charging chamber) 101, a second solution chamber (elution chamber) 102 adjacent to the first solution chamber 101, and a separator 111 that separates the first solution chamber 101 and the second solution chamber 102 from each other. The first solution chamber 101 is charged with a first buffer 131 and target molecules 141. The second solution chamber 102 is filled with a second buffer 132. The electrophoretic device 100 shown in Fig. 1 further includes a pair of electrodes 121 and 122. The first solution chamber 101 and the second solution chamber 102 are sandwiched between the pair of electrodes 121 and 122. In other words, the pair of electrodes 121 and 122 is disposed such that the target molecules 141 inside the first solution chamber 101 move to the second solution chamber 102 from the first solution chamber 101 through the separator 111 in an electric field generated by the pair of electrodes 121 and 122.

The pair of electrodes 121 and 122 is connected to a DC power source 123. In Fig. 1A, a switch 125 is open.

As shown in Fig. 1B, the switch 125 is closed, the electrode 121 is negatively charged and the electrode 122 is positively charged, and an electric field is generated between the electrodes 121 and 122. Electrophoresis occurs in this electric field. That is, the target molecules 141 having a negative electric charge begin to move through the inside of the first buffer 131 toward to the electrode 122. The target molecules 141 pass through the separator 111 and enter the inside of the second buffer 132 of the second solution chamber 102.

As shown in Fig. 1C, electrophoresis is performed for a predetermined time so that a sufficient amount of the target molecules 141 enter the inside of the second buffer 132 of the second solution chamber 102. The switch 125 is opened to release the electric field and to finish the treatment.

In this manner, the target molecules 141 initially contained in the first buffer 131 are contained in the second buffer 132. The buffers are exchanged for each other. In some embodiments, the concentration of the target molecules 141 can be increased.

### <Embodiment 2>

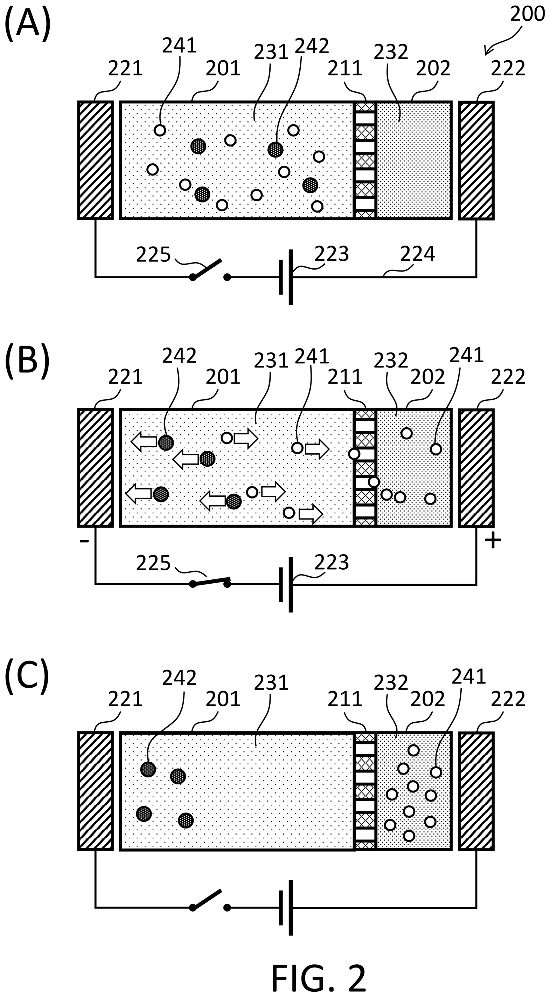

A device 200 according to an embodiment of the present disclosure and the operation thereof will be described with reference to Fig. 2.

As shown in Fig. 2A, the electrophoretic device 200 includes a first solution chamber (charging chamber) 201, a second solution chamber (elution chamber) 202 adjacent to the first solution chamber 201, and a separator 211 that separates the first solution chamber 201 and the second solution chamber 202 from each other. The first solution chamber 201 is charged with a first buffer 231, target molecules 241, and contaminants 242. The second solution chamber 202 is filled with a second buffer 232.

The electrophoretic device 200 shown in Fig. 2 further includes a pair of electrodes 221 and 222. In Fig. 2A, a switch 225 is open.

In the present embodiment, the target molecules 241 and the contaminants 242 have isoelectric points that are different from each other. The pH of the first buffer 231 is between the isoelectric points thereof. That is, the isoelectric point of the target molecules 241 is less than the pH of the first buffer 231, and the isoelectric point of the contaminants 242 is greater than the pH of the first buffer 231.

As shown in Fig. 2B, the switch 225 is closed, the electrode 221 is negatively charged and the electrode 222 is positively charged, and an electric field is generated between the electrodes 221 and 222. Electrophoresis occurs in this electric field. That is, the target molecules 241 having a negative electric charge begin to move through the inside of the first buffer 231 toward to the electrode 222. The target molecules 241 pass through the separator 211 and enter the inside of the second buffer 232 of the second solution chamber 202. Meanwhile, the contaminants 242 having a positive electric charge begin to move through the inside of the first buffer 231 toward to the electrode 221. In other words, the contaminants 242 do not move toward the electrode 222 or the separator 211.

As shown in Fig. 2C, electrophoresis is performed for a predetermined time so that a sufficient amount of the target molecules 241 enter the inside of the second buffer 232 of the second solution chamber 202. The contaminants 242 remain in the first solution chamber (charging chamber) 201 or in the first buffer 231. The switch 225 is opened to release the electric field and to finish the treatment.

In this manner, the target molecules 241 initially contained in the first buffer 231 are contained in the second buffer 232. The second buffer 232 do not contain the contaminants 242. That is, the target molecules 241 can be purified or separated. Further, the buffers are exchanged for each other. In some embodiments, the concentration of the target molecules 241 can be increased.

### <Embodiment 3>

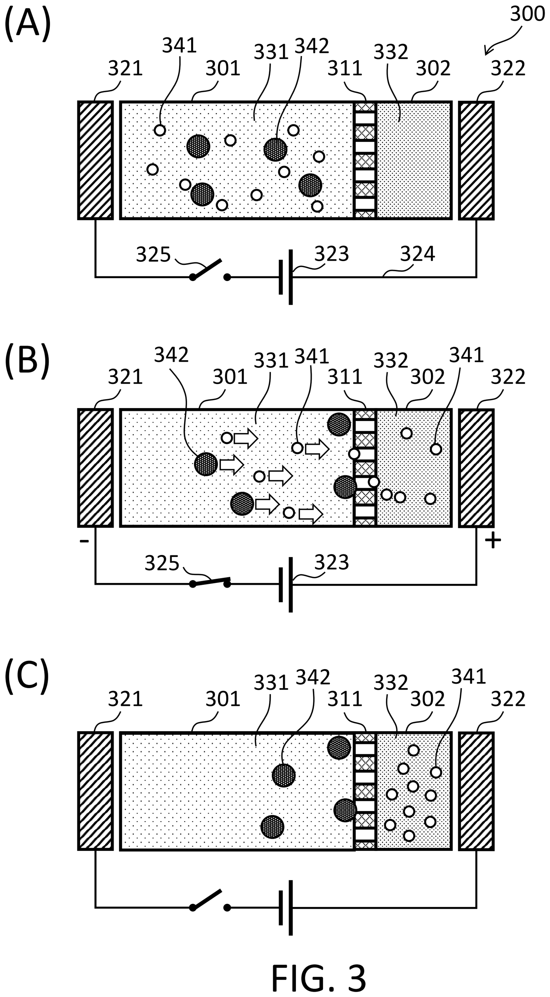

A device 300 according to an embodiment of the present disclosure and the operation thereof will be described with reference to Fig. 3.

As shown in Fig. 3A, the electrophoretic device 300 includes a first solution chamber (charging chamber) 301, a second solution chamber (elution chamber) 302 adjacent to the first solution chamber 301, and a separator 311 that separates the first solution chamber 301 and the second solution chamber 302 from each other. The first solution chamber 301 is charged with a first buffer 331, target molecules 341, and contaminants 342. The second solution chamber 302 is filled with a second buffer 332. The electrophoretic device 300 shown in Fig. 3 further includes a pair of electrodes 321 and 322. In Fig. 3A, a switch 325 is open.

In the present embodiment, the separator 311 has selectivity. That is, the separator 311 has an ability to pass the target molecules 341 and not pass the contaminants 342. For example, the typical contaminants 342 are assumed to have a size greater than that of the target molecules 341. The separator 311 is a semipermeable membrane, and the pore size thereof is greater than that of the target molecules 341 and less than that of the contaminants 342.

As shown in Fig. 3B, the switch 325 is closed, the electrode 321 is negatively charged and the electrode 322 is positively charged, and an electric field is generated between the electrodes 321 and 322. Electrophoresis occurs in this electric field. That is, the target molecules 341 begin to move through the inside of the first buffer 331 toward to the electrode 322. The target molecules 341 pass through the separator 311 and enter the inside of the second buffer 332 of the second solution chamber 302. In Fig. 3, the contaminants 342 are assumed to have the same electric charge as that of the target molecules 341. The contaminants 342 begin to move through the inside of the first buffer 331 toward the electrode 322. However, the contaminants 342 cannot pass through the separator 311 and cannot enter the inside of the second buffer 332 of the second solution chamber 302. Therefore, the contaminants 342 remain inside the first buffer 331.

As shown in Fig. 3C, electrophoresis is performed for a predetermined time so that a sufficient amount of the target molecules 341 enter the inside of the second buffer 332 of the second solution chamber 302. The contaminants 342 remain in the first solution chamber (charging chamber) 301 or in the first buffer 331. The switch 325 is opened to release the electric field and to finish the treatment.

In this manner, the target molecules 341 initially contained in the first buffer 331 are contained in the second buffer 332. The second buffer 332 do not contain the contaminants 342. That is, the target molecules 341 can be purified or separated. Further, the buffers are exchanged for each other. In some embodiments, the concentration of the target molecules 341 can be further increased.

### <Embodiment 4>

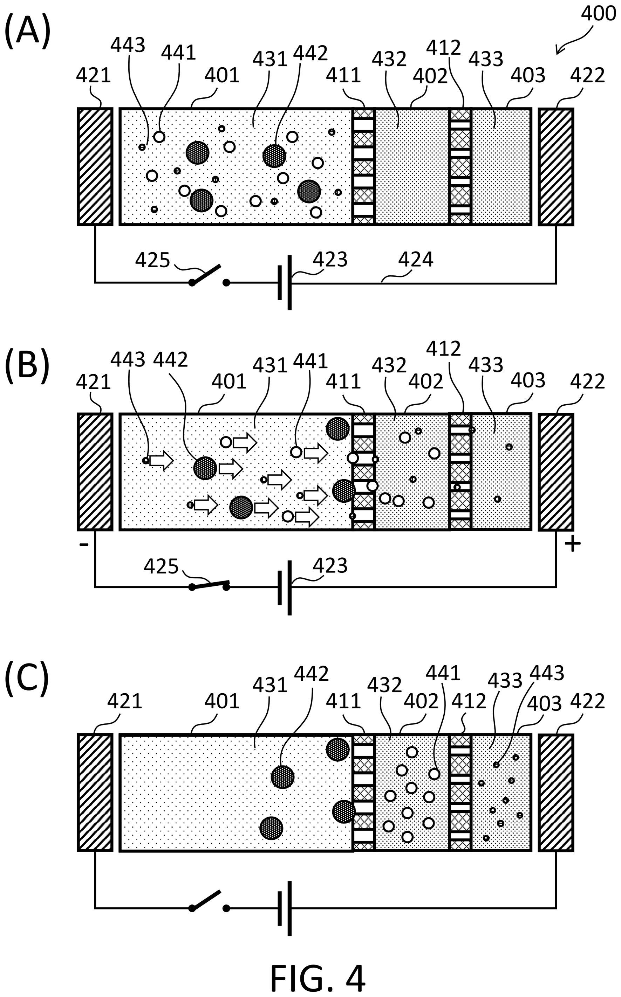

A device 400 according to an embodiment of the present disclosure and the operation thereof will be described with reference to Fig. 4.

As shown in Fig. 4A, the electrophoretic device 400 includes a first solution chamber (charging chamber) 401, a second solution chamber (elution chamber) 402 adjacent to the first solution chamber 401, and a first separator 411 that separates the first solution chamber 401 and the second solution chamber 402 from each other. The first solution chamber 401 is charged with a first buffer 431, target molecules 441, and contaminants 442 and 443. The second solution chamber 402 is filled with a second buffer 432.

The electrophoretic device 400 further includes a third solution chamber 403 (discharge chamber) that is adjacent to the second solution chamber (elution chamber) 402 and a second separator 412 that separates the second solution chamber 402 and the third solution chamber 403 from each other.

The electrophoretic device 400 shown in Fig. 4 further includes a pair of electrodes 421 and 422. In Fig. 4A, a switch 425 is open.

In the present embodiment, the first separator 411 and the second separator 412 have selectivity. That is, the first separator 411 has an ability to pass the target molecules 441 and not pass the contaminants 442. For example, the typical contaminants 442 are assumed to have a size greater than that of the target molecules 441. For example, the first separator 411 is a semipermeable membrane, and the pore size thereof is greater than that of the target molecules 441 and less than that of the contaminants 442. In the present embodiment, the contaminants 443 can pass through the first separator 411.

The second separator 412 has an ability to pass the contaminants 443 and not pass the target molecules 441. For example, the typical contaminants 443 are assumed to have a size less than that of the target molecules 441. For example, the second separator 412 is a semipermeable membrane, and the pore size thereof is less than that of the target molecules 441 and greater than that of the contaminants 443. In the present embodiment, the contaminants 443 can pass through the first separator 411.

As shown in Fig. 4B, the switch 425 is closed, the electrode 421 is negatively charged and the electrode 422 is positively charged, and an electric field is generated between the electrodes 421 and 422. Electrophoresis occurs in this electric field. That is, the target molecules 441, and the contaminants 442 and 443 having the same electric charge begin to move through the inside of the first buffer 431 toward to the electrode 422. The target molecules 441 and contaminants 443 pass through the first separator 411 and enter the inside of the second buffer 432 of the second solution chamber 402. The contaminants 442 cannot pass through the first separator 411 and cannot enter the inside of the second buffer 432 of the second solution chamber 402. Therefore, the contaminants 442 remain inside the first buffer 431.

The target molecules 441 and the contaminants 443 move through the inside of the second buffer 432 toward to the electrode 422. The contaminants 443 pass through the second separator 412 and enter the inside of the third buffer 433 of the third solution chamber 403. The target molecules 441 cannot pass through the second separator 412 and cannot enter the inside of the third buffer 433 of the third solution chamber 403. Therefore, the target molecules 441 remain inside the second buffer 432.

As shown in Fig. 4C, electrophoresis is performed for a predetermined time so that a sufficient amount of the target molecules 441 enter the inside of the second buffer 432 of the second solution chamber 402. The contaminants 442 remain in the first solution chamber (charging chamber) 401 or in the first buffer 431, and the contaminants 443 enter the inside of the third solution chamber (discharge chamber) 403 or the third buffer 433. The switch 425 is opened to release the electric field and to finish the treatment.

In this manner, the target molecules 441 initially contained in the first buffer 431 are contained in the second buffer 432. The second buffer 432 do not contain the contaminants 442 and 443. That is, the target molecules 441 can be purified or separated. Further, the buffers are exchanged for each other. In some embodiments, the concentration of the target molecules 441 can be further increased.

### <Embodiment 5>

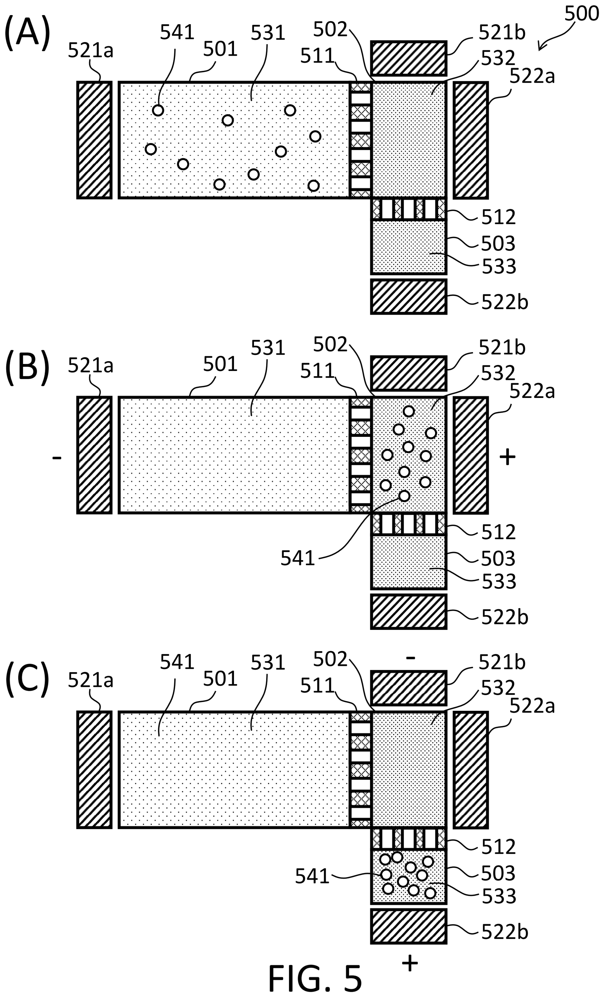

A device 500 according to an embodiment of the present disclosure and the operation thereof will be described with reference to Fig. 5.

As shown in Fig. 5A, the electrophoretic device 500 includes a first solution chamber (charging chamber) 501, a second solution chamber (first elution chamber) 502 adjacent to the first solution chamber 501, and a first separator 511 that separates the first solution chamber 501 and the second solution chamber 502 from each other. The first solution chamber 501 is charged with a first buffer 531 and target molecules 541. The second solution chamber 502 is filled with a second buffer 532.

The electrophoretic device 500 includes a third solution chamber 503 (second elusion chamber) that is adjacent to the second solution chamber (elution chamber) 502, and a second separator 512 that separates the second solution chamber 502 and the third solution chamber 503 from each other. The third solution chamber 503 is filled with a second buffer 533.

The electrophoretic device 500 of Fig. 5 further includes a pair of first electrodes 521a and 522a and is disposed such that electrophoresis is performed on the first solution chamber 501, the first separator 511, and the second solution chamber 502. The second separator and the third solution chamber are disposed perpendicularly or at an angle to the electric field generated by the pair of the first electrodes 521a and 522a. The electrophoretic device 500 of Fig. 5 further includes a pair of second electrodes 521b and 522b and is disposed such that electrophoresis is performed on the second solution chamber 502, the second separator 512, and the third solution chamber 503. In some embodiments, the electrophoretic device is configured such that the first solution chamber 501, the first separator 511, the second solution chamber 502, and the pair of the first electrodes 521a and 522a perform primary electrophoresis, and the second solution chamber 502, the second separator 512, the third solution chamber 503, and the pair of the second electrodes 521b and 522b perform secondary electrophoresis. In Fig. 5, a switch is omitted.

As shown in Fig. 5B, a voltage is applied to the pair of the first electrodes 521a and 522a to generate an electric field therebetween. Electrophoresis occurs in this electric field. That is, the target molecules 541 begin to move through the inside of the first buffer 531 toward to the electrode 522a. The target molecules 541 pass through the first separator 511 and enter the inside of the second buffer 532 of the second solution chamber 502.

Electrophoresis is performed for a predetermined time so that a sufficient amount of the target molecules 541 enter the inside of the second buffer 532 of the second solution chamber 502. The electric field is released to finish the primary electrophoresis.

In this manner, the target molecules 541 initially contained in the first buffer 531 are contained in the second buffer 532. Further, the buffers are exchanged for each other. In some embodiments, the concentration of the target molecules 541 can be further increased.

Next, as shown in Fig. 5C, the voltage of the pair of the first electrodes 521a and 522a is released, and the voltage is applied to the pair of the second electrodes 521b and 522b to generate an electric field therebetween. Electrophoresis occurs in this electric field. That is, the target molecules 541 begin to move through the inside of the second buffer 532 toward to the electrode 522b. The target molecules 541 pass through the second separator 512 and enter the inside of the third buffer 533 of the third solution chamber 503.

Electrophoresis is performed for a predetermined time so that a sufficient amount of the target molecules 541 enter the inside of the third buffer 533 of the third solution chamber 503. The electric field is released to finish the secondary electrophoresis.

In this manner, the target molecules 541 initially contained in the first buffer 531 are contained in the third buffer 533 through the second buffer 532. Further, the buffers are exchanged for each other twice. In some embodiments, the concentration of the target molecules 541 can be further increased.

In some embodiments, the separation or purification may be performed by primary electrophoresis and secondary electrophoresis. In some embodiments, the separation or purification is mainly performed by primary electrophoresis and not required to be performed by the secondary electrophoresis. In some embodiments, the concentration may be performed by primary electrophoresis and secondary electrophoresis. In some embodiments, the concentration is mainly performed by primary electrophoresis and not required to be performed by the secondary electrophoresis. In some embodiments, the buffer exchange may be performed by primary electrophoresis and secondary electrophoresis. In some embodiments, the buffer exchange is mainly performed by primary electrophoresis and not required to be performed by the secondary electrophoresis.

In some embodiments, the target molecules contained in the charging liquid are subjected to one or a plurality of treatments selected from separation, purification, concentration, and buffer exchange by primary electrophoresis, and the treated target molecules may be allowed to move to another place by secondary electrophoresis. For example, the treated target molecules may be allowed to move to a place such as a system, a sensor, a flow path, or a space where the target molecules are measured, by secondary electrophoresis. The third solution chamber of the present embodiment may be a solution chamber such as a system, a sensor, a flow path, or a space where the target molecules are measured, or a solution chamber that is fluidly connected to these places.

### <Various embodiments>

Various embodiments can be made in addition to the above-described embodiments.

In some embodiments, the separator may allow the contaminants to pass and inhibits the target substance from passing.

In some embodiments, another substance (also referred to as "binding substance") may be bonded to the target substance or contaminants. In some embodiments, the binding substance may be designed or selected such that the complex of the target substance or the contaminants and the binding substance cannot pass through the separator having size selectivity. In some embodiments, the binding substance may be designed or selected such that the isoelectric point of the complex of the binding substance and the target substance is different from the isoelectric point of the target substance. For example, only the target substance is not allowed to move, but the binding substance may be designed such that the complex of the target substance and the binding substance moves or vice versa.

In some embodiments, the device may include a charging chamber and two elusion chambers adjacent to the charging chamber. The first elusion chamber, the first separator, the charging chamber, the second separator, and the second elution chamber may be disposed in order between the pair of electrodes in the direction of the electric field thereof. For example, the first target substance may move to the first elusion chamber after passing through the first separator from the charging chamber, and the second target substance may move to the second elution chamber after passing through the second separator from the charging chamber. The pH of the charging liquid may be set to be between the isoelectric point of the first target substance and the isoelectric point of the second target substance. The two target substances can be separated, purified, and concentrated by performing an electric field application operation once, and the buffers can be exchanged for each other.

In some embodiments, the directions of electric fields may be replaced with each other. For example, application of an electric field in one direction leads to movement of the target substance and movement of some contaminants (for example, low molecules) to the elusion chamber in some cases. For example, in a case where the contaminants are low molecules, it is effective to temporarily apply a reverse electric field (electric field in the backward direction). The application of the reverse electric field leads to movement of the target substance and the low molecules, which have moved to the elution chamber, in a direction of the charging chamber again. Here, the low molecules with a molecular weight less than the molecular weight of the target substance move faster than the target substance and can return to the charging chamber. However, the target substance does not move as much as the low molecules and cannot return to the charging chamber. That is, in a case where an appropriate reverse electric field is applied with respect to the application of the positive electric field, the movement of the contaminants in a direction opposite to the direction of the target substance is promoted, and the concentration and/or the purity of the target substance in the elution chamber can be increased.

### <Examples>

Hereinafter, several examples will be described. The preparation and measurement steps, the conditions, and the like common to the examples are as follows. In a case of the presence of a difference in the steps, the conditions, and the like, the difference will be described in the section of each example.

### <Sample preparation>

Human serum albumin (HSA, hereinafter, also referred to as "albumin") (COSMO BIO COMPANY, LIMITED), a 10× Tris-Glycine Buffer (FUJIFILM Wako Pure Chemical Corporation), and pure water (DW) were mixed with each other to prepare an HSA diluent. The volume ratio of HSA, the Tris-Glycine Buffer, and DW was 1:2:17 in a case of dilution to 20 times and was 2:1:7 in a case of dilution to 5 times.

### <Preparation of tube for process electrophoresis>

A plastic tube having an inner diameter of about 6 to 8 mm and a length of several cm was used for an process electrophoresis. In a case where two solution chambers were provided, two tubes (a charging chamber tube and an elution chamber tube) fittable to the solution chambers were used. These tubes and chambers were tightly connected to each other, and a separator or a membrane supporting a separator was tightly sandwiched therebetween. In a case where a semipermeable membrane was used as a separator, a semipermeable membrane was tightly sandwiched between two tubes. In a case where a gel was used as a separator, a 0.45 µm polytetrafluoroethylene resin-coated membrane (PTEF membrane) or a 0.2 µm cellulose acetate membrane was tightly sandwiched between two tubes as a support of a gel, and a liquid-like gel was added dropwise onto the surface of the charging chamber and allowed to stand until the gel was solidified. Alternatively, in a case where a support was not used, one end of the elution chamber tube was closed with Saran Wrap (registered trademark, ASAHI KASEI CORPORATION), and a gel was introduced from an opening at the other end. The gel was solidified, Saran Wrap was removed, and the elution chamber tube was connected to the charging chamber tube.

A solution containing the target substance was poured into the charging chamber, and the buffer (tris-glycine with a pH of about 8.3 to 9.0) was poured into the elution chamber.

After the solution was poured into both ends of the tube, and the openings were sealed with a dialysis membrane having a molecular weight cutoff of 12 kDa to 14 kDa to prevent air bubbles from entering. The volume of an elution chamber V1 was adjusted by the length of the elution chamber and was about 35 µL to 260 µL. A Tris-Glycine Buffer (#201-18601, FUJIFILM Wako Pure Chemical Corporation, pH of 8.3 to 9.0) was used as the buffer of the elution chamber.

### <Process electrophoresis>

An electrophoresis tube filled with a solution was immersed in an electrophoresis tank filled with a 1× Tris-Glycine Buffer. The electrophoresis tank was placed in a chromatographic chamber held at 4°C and maintained in a state of being sufficiently cooled. In the electrophoresis tank, a positive electrode was disposed at an end portion of the elution chamber of the electrophoresis tube, and a negative electrode was disposed at an end portion of the charging chamber. A voltage of 150 V was applied to these electrodes for 120 minutes.

### <Measurement of absorbance of albumin>

The absorbance was measured using DM-JACK (registered trademark, Minaris Medical Co., Ltd.). A calibration curve was created with a standard substance as necessary before the measurement. A pre-electrophoresis sample and an elution sample were diluted with a 1× Tris-Glycine Buffer such that the estimated absorbances thereof were approximately in a range of the calibration curve thereof.

### <Electrophoresis for measurement>

Electrophoresis for measurement was performed using SDS-PAGE. The eluate was taken out from the elution chamber after the process electrophoresis. In a case of a saliva sample, 10 µL of a 4× Loading Buffer (#196-16142, FUJIFILM Wako Pure Chemical Corporation) was mixed with 30 µL of the eluate. In a case of a serum sample, 5 µL of a 4× Loading Buffer (#196-16142, FUJIFILM Wako Pure Chemical Corporation) and 10 µL of DW were added to 5 µL of the eluate that had been diluted to 25 to 50 times. This sample was heated at 95°C for 10 minutes. Next, 8 µL was added dropwise to a 10% polyacrylamide gel (#NTH-525P, DRC Co., Ltd.). The electrophoresis was performed at 180 V for 60 minutes, and the resultant was stained, decolored, and photographed.

### <Example 1: concentration>

Ideally, when all molecules of the target substance, which had been initially put into the charging chamber, moved to the elution chamber, a ratio (V1/V0) of a volume (V1) of the elution chamber to a volume (V0) of the charging chamber was the same as the concentration ratio (C1/C0). However, actually, not the entire target substance moves to the elution chamber. For example, a part of the target substance adheres to the separator or the inner wall of the charging chamber. For example, a part of the target substance cannot pass through the separator within a pre-set time. For example, a part of the target substance may leak out from the electrophoresis tube. However, the concentration ratio is usually considered to be a function of the ratio between the volume of the charging chamber and the volume of the elution chamber. In the present example, the ratio between the volume of the charging chamber and the volume of the elution chamber was changed (V0/V1 = 6 to 56), and the concentration ratio of albumin (HSA) as the target substance was determined by measuring the absorbance to confirm that the concentration ratio was the function of the volume ratio.

HSA added was prepared at two different concentrations, which were HSA diluted to 5 times and HSA diluted to 20 times. In the present example, an agarose gel was used as a separator. The concentration of each HSA was determined by an absorbance method using DM-JACK. The concentration ratio was determined as the ratio between the concentration (C0) of HSA before charging (before the process electrophoresis) and the concentration (C1) of HSA (obtained from the elution chamber) after the process electrophoresis.

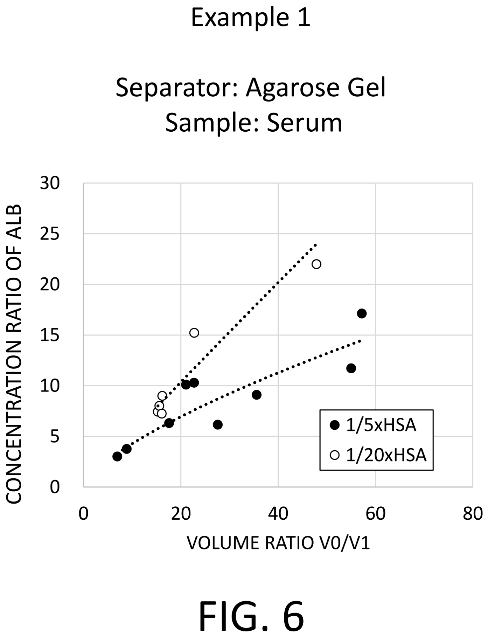

As shown in Fig. 6, the concentration ratio was observed to be approximately linear with respect to the volume ratio in both cases of HSA diluted to 5 times and HSA diluted to 20 times. Not the entire albumin in the charging liquid moved to the elution chamber. However, this linear relationship indicates that the concentration ratio can be easily determined or controlled by the structure of the electrophoretic device.

### <Example 2: purification using agarose gel>

In the present example, albumin as the target substance was purified from saliva and serum using an agarose gel as a separator.

A saliva sample was prepared in the following manner.

3.6 mL of the saliva sample was obtained from the inventor and filtered through cotton. The resultant was mixed with 0.4 mL of a 1× Tris-Glycine Buffer (#201-18601, FUJIFILM Wako Pure Chemical Corporation, pH of 8.3 to 8.9). A serum sample was prepared in the same manner as in Example 1.

The separator was prepared by dissolving agarose gel in a 1× Tris-Glycine Buffer (also FUJIFILM Wako Pure Chemical Corporation) at a volume ratio of 1%. The separator was supported by a filter unit of Ultrafree MC-HV PVDF with a pore size of 0.45 µm (Merck KGaA).

The process electrophoresis was performed at an applied voltage of 100 V for 240 minutes.

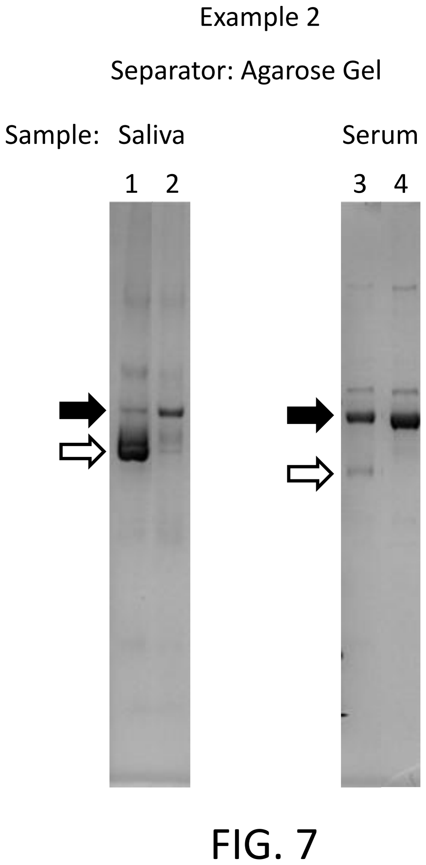

Fig. 7 is an electrophoretic gel photograph. 1 and 2 each correspond to the original saliva sample and the eluate after the process electrophoresis. 3 and 4 each correspond to the original serum sample and the eluate after the process electrophoresis. Albumin is indicated by black arrows, and main contaminants are indicated by white arrows.

In the original saliva sample (1), bands of the albumin (black arrow) and the contaminants (white arrow, corresponding to amylase) were observed. Meanwhile, in the saliva sample (2) after the process electrophoresis, the band of the contaminants was turned light, and the band of the albumin was turned dark. The concentration ratio of the present process electrophoresis was about 35 times based on the density of the bands. That is, the contaminants were removed, and the albumin as the target substance was concentrated.

In the original serum sample (3), bands of the albumin (black arrow) and the contaminants (white arrow, corresponding to IgG Light-chain) were observed. Meanwhile, in the serum sample (4) after the process electrophoresis, the band of the contaminants was turned light, and the band of the albumin was turned dark. The concentration ratio of the present process electrophoresis was about 2.1 times based on the density of the bands.

In both the saliva sample and the serum sample, the albumin as the target substance was concentrated, and the contaminants were removed.

### <Example 3: purification using polyacrylamide gel>

In the present example, a polyacrylamide gel was used as a separator, and albumin as the target substance was purified from the serum.

A serum sample was prepared by mixing 0.6 mL of serum (#12181450, COSMO BIO COMPANY, LIMITED), 0.6 mL of a 1× Tris-Glycine Buffer (pH of 8.5), and 4.8 mL of pure water (DW).

A separator was prepared in the following manner. First, 300 µL of ultrapure water, 50 µL of a 1× Tris-Glycine with a pH of 8.5, 150 µL of a 30 w/v% acrylamide/bis mixed solution, 2.5 µL of 10% APS, and 0.25 µL of TMED were mixed with each other, thereby preparing a 9% polyacrylamide gel. The gel was put into a tube for an elution chamber having one end closed with Saran Wrap. After the gel was solidified, Saran Wrap was removed, and the elution chamber tube was connected to the charging chamber tube.

The process electrophoresis was performed at an applied voltage of 150 V for 150 minutes.

The electrophoresis for measurement was performed in the following manner. First, the eluate was taken out from the elution chamber after the process electrophoresis. The eluate was mixed with 1 µL of an eluate diluted to 25 times with a 1× Tris-Glycine Buffer (pH of 8.5), 5 µL of a 4× Loading Buffer (#196-16142, FUJIFILM Wako Pure Chemical Corporation), and 14 µL of ultrapure water. 5 µL of the original serum sample diluted to 25 times, 5 µL of a 4× Loading Buffer (#196-16142, FUJIFILM Wako Pure Chemical Corporation), and 10 µL of ultrapure water were mixed with each other. The mixed solution was heated at 95°C for 10 minutes. Next, 8 µL of the mixed solution was added dropwise to a 10% polyacrylamide gel (#NTH-525P, DRC Co., Ltd.). The electrophoresis was performed on the mixed solution at 180 V for 60 minutes.

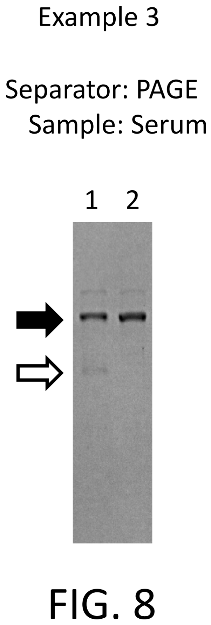

Fig. 8 is an electrophoretic gel photograph. 1 and 2 each correspond to the original serum sample and the eluate after the process electrophoresis.

In the serum sample (2) after the process electrophoresis, the band (black arrow) of albumin was turned dark, and the band (white arrow) of the contaminants was turned extremely light as compared with the original serum sample (1). The concentration ratio of the present process electrophoresis was about 6.5 times based on the density of the bands. That is, the contaminants were removed, and the albumin as the target substance was concentrated.

### <Example 4: purification using dialysis membrane>

In the present example, a dialysis membrane (semipermeable membrane) was used as a separator, and albumin as the target substance was purified from the serum.

A serum sample was prepared in the same manner as in Example 3. A dialysis membrane having a molecular weight of 100 kDa (Biotech CE, trial kit, 100 KD, 24 mm, 1 m (131417T)) was used as a separator.

The process electrophoresis was performed at an applied voltage of 150 V for 120 minutes.

The electrophoresis for measurement was performed in the following manner. First, after the process electrophoresis, the eluate was taken out from the elution chamber, and diluted to 25 times with a 1× Tris-Glycine Buffer (pH of 8.6). 5 µL of the eluent diluted to 10 times, 5 µL of a 4× Loading Buffer (#196-16142, FUJIFILM Wako Pure Chemical Corporation), and 10 µL of DW were mixed with each other. The mixed solution was heated at 95°C for 10 minutes. 1 µL, 4 µL, or 8 µL of the mixed solution was added dropwise to a 5% to 20% polyacrylamide gel (#NTH-576HP10, DRC Co., Ltd.). The electrophoresis was performed on the mixed solution at 180 V for 60 minutes.

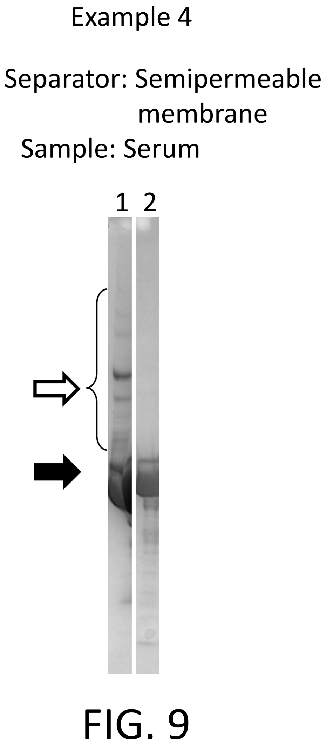

Fig. 9 is an electrophoretic gel photograph. 1 and 2 each correspond to the original serum sample and the eluate after the process electrophoresis.

In the serum sample (2) after the process electrophoresis, the band (black arrow) of albumin was turned dark, and the band (white arrow) of the contaminants almost disappeared as compared with the original serum sample (1). HSA had a molecular weight of about 66 kDA. It was confirmed that HSA having a molecular weight of less than 100 kDa passed through the separator by the process electrophoresis, but molecules having a molecular weight greater than 100 kDa did not pass through the separator. Further, the molecules having a molecular weight greater than 100 kDa were contained in serum but not contained in saliva. Amylase was contained in saliva but not in serum.

### <Example 5: purification based on isoelectric point>

In the present example, albumin was separated by setting the pH of the charging liquid to be between the isoelectric point (pI = 4.9) of the target substance (albumin) and the isoelectric point (pI = about 7) of the contaminants (hemoglobin). An agarose gel was used as a separator.

A sample was prepared by mixing 20 µL of serum (#12181450, COSMO BIO COMPANY, LIMITED), 800 µL of HbAlc (MetaboLead HbAlc, #058619, Hitachi Chemical Diagnostics Systems Co., Ltd.), 1600 µL of a 10 mM sodium phosphate buffer (pH of 6.5) or a 1× Tris-Glycine Buffer (pH of 8.5), and 5600 µL of DW.

A separator was prepared by introducing a 1% agarose gel into a 10 mM sodium phosphate buffer, a 1× Tris-Glycine Buffer (pH of 6.5), or a 1× Tris-Glycine Buffer (pH of 8.5). 250 µL of the gel was supported by using a filter unit of Gel Ultrafree MC-HV PVDF with a pore size of 0.45 µm (Merck KGaA).

The process electrophoresis was performed at 130 mA for 140 minutes.

The electrophoresis for measurement was performed in the following manner. First, the eluate was taken out from the elution chamber after the process electrophoresis. 0.8 µL of the eluate, 5 µL of a 4× Loading Buffer (#196-16142, FUJIFILM Wako Pure Chemical Corporation), and 14.2 µL of DW were mixed with each other. 4 µL of the original mixed sample solution, 5 µL of a 4× Loading Buffer (#196-16142, FUJIFILM Wako Pure Chemical Corporation), and 11 µL of DW were mixed with each other. The mixed solution was heated at 95°C for 10 minutes. 5 µL of the mixed solution was added dropwise to a 5% to 20% polyacrylamide gel (#NTH-576HP10, DRC Co., Ltd.). The electrophoresis was performed on the mixed solution at 180 V for 60 minutes.

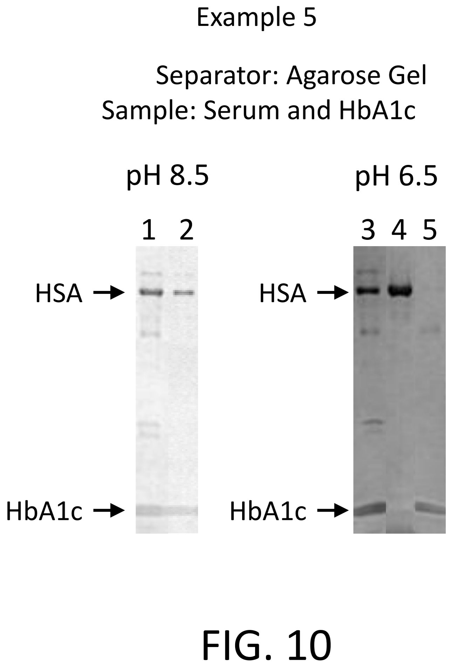

Fig. 10 is an electrophoretic gel photograph. 1 and 2 each correspond to the original sample (1) in a case of a charging liquid having a pH of 8.5 and the eluate (2) after the process electrophoresis. Both the albumin (pI = 4.9) and hemoglobin (pI = about 7) moved to the elution chamber by the process electrophoresis. Both the albumin and the hemoglobin had a pH of 8.5 and were negatively charged, and thus moved in a direction of the positive electrode and entered the elution chamber. 3, 4, and 5 each correspond to the original sample (3), the eluate (4) after the process electrophoresis, and the eluate (5) after the process electrophoresis in the opposite direction, in a case of a charging liquid having a pH of 6.5. As understood from the eluate (4) after the process electrophoresis, the hemoglobin did not move to the elution chamber by the process electrophoresis. As understood from a case where a reverse voltage was applied, it was found that the hemoglobin moved in the opposite direction (direction of the negative electrode). That is, it was confirmed that the albumin moved toward the positive electrode and the hemoglobin moved toward the negative electrode. In this manner, it was found that the target substance was separable from the contaminants by setting the pH of the charging liquid to be between the isoelectric point of the target substance and the isoelectric point of the contaminants.

### <Example 6: addition of resin>

In the present example, a resin was added to the separator, and albumin as the target substance was purified from saliva.

A saliva sample was prepared in the following manner. 12.6 mL of the saliva sample was obtained from the inventor and filtered through cotton. The resultant was mixed with 1.4 mL of a 1× Tris-Glycine Buffer (pH of 7.5).

Each resin was added to the mixture. The resins were added in the following manner.

First, additives were equilibrated with a 1× Tris-Glycine Buffer to remove the supernatant as much as possible. A 2% agarose gel dissolved was added to and mixed with each of the resins maintained at 65°C. The resins and the agarose gel were sufficiently suspended, and about 250 µL of the mixture was introduced to the separator portion, sufficiently cooled, and solidified. The agarose-mixed gel was supported by a cellulose acetate membrane filter having an opening diameter of 0.2 µm (Advantec Toyo Kaisha, Ltd.).

The additives used in the present example are as follows.
Cation exchange carrier "SP": TOYOPEARL SP-650M, TOSOH, #0007997
Anion exchange carrier "SQ": TOYOPEARL SuperQ-650M, TOSOH, #0017227
Hydroxyapatite "HA": CHT Ceramic Hydroxyapatite, Bio-Rad, #1582200

The process electrophoresis was performed at 130 mA for 120 minutes.

The electrophoresis for measurement was performed in the following manner. First, the eluate was taken out from the elution chamber after the process electrophoresis. 10 µL of the eluate, 5 µL of a 4× Loading Buffer (#196-16142, FUJIFILM Wako Pure Chemical Corporation), and 5 µL of DW were mixed with each other. The mixed solution was heated at 95°C for 10 minutes. 3 µL of the mixed solution was added dropwise to a 5% to 20% polyacrylamide gel (#NTH-576HP10, DRC Co., Ltd.). The electrophoresis was performed on the mixed solution at 180 V for 60 minutes.

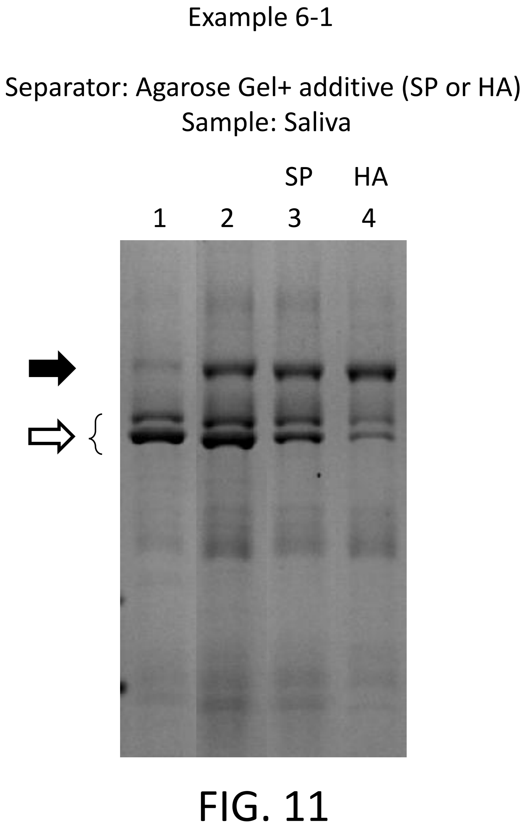

Fig. 11 is an electrophoretic gel photograph showing SP and HA as the additives. 1, 2, 3, and 4 each correspond to the original saliva sample (1), the eluate (2) in a case of having no resin additives, the eluate (3) in a case of addition of SP, and the eluate (4) in a case of addition of HA.

In the original saliva sample (1), bands of the albumin (black arrow) and the contaminants (white arrow, corresponding to amylase) were observed. The bands of the eluate (2) in a case of having no resin additives were turned darker than the bands of the original saliva sample (1) due to concentration. Removal of amylase was not effectively carried out when additives were not added. Meanwhile, in the eluate (3) in a case of addition of SP, the bands of albumin were almost the same as each other, and the bands of amylase were turned lighter. It was found that SP effectively blocked passage of amylase to the elution chamber. Further, in the eluate (4) in a case of addition of HA, the bands of albumin were almost the same as each other, and the bands of amylase were significantly turned lighter. It was found that SP more effectively blocked passage of amylase to the elution chamber.

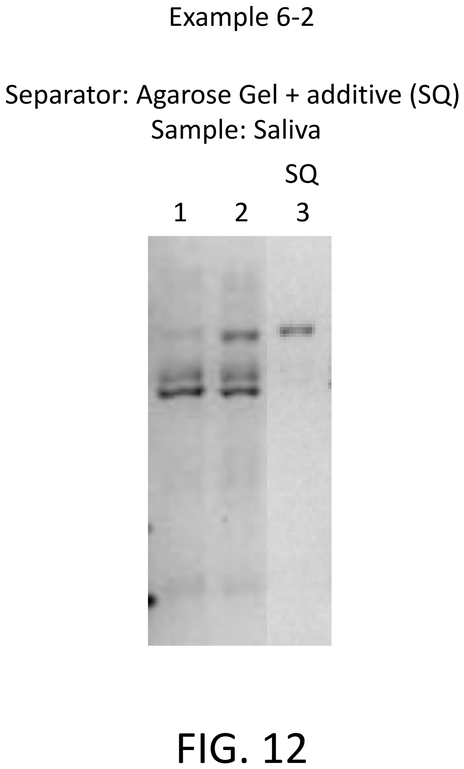

Fig. 12 is an electrophoretic gel photograph showing SQ as the additive. The reference numerals 1, 2, and 3 each correspond to the original saliva sample (1), the eluate (2) in a case of having no resin additives, and the eluate (3) in a case of addition of SQ. In the eluate (4) in a case of addition of SQ, the bands of albumin were almost the same as or slightly lighter than the bands of the eluate (2) in a case of having no resin additive, and the bands of amylase almost disappeared. It was found that SQ extremely effectively blocked passage of amylase to the elution chamber.

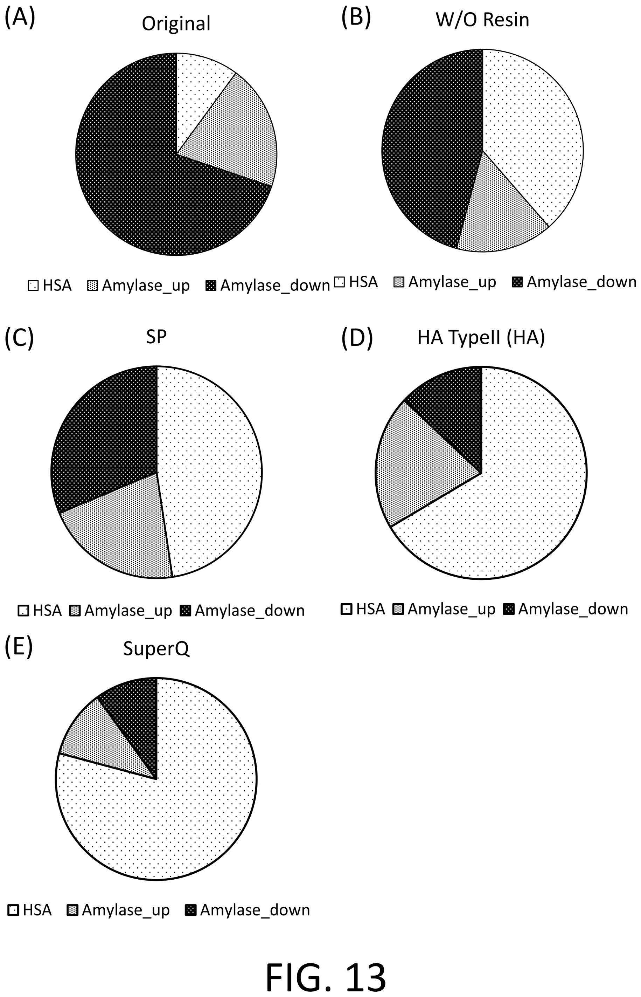

The abundance ratio of HSA and two amylases contained in each solution was determined from the density of bands in the electrophoretic gel photographs in Figs. 11 and 12 (Fig. 13). "Amylase _up" and "Amylase_down" each correspond to two bands appearing below the peak of albumin, "Amylase _up" is a band close to albumin, and "Amylase_down" is a band far from albumin. The eluate described here is an eluate after the process electrophoresis without the original saliva and the resin additives and an eluate after the process electrophoresis in a case where the additive SP, HA, or SQ was added.

Fig. 13 shows graphs collectively showing the results of Figs. 11 and 12. The original saliva contained an extremely large amount of amylase relative to HSA. Here, HSA and two amylases were compared with each other. Particularly, the original saliva contained a large amount of Amylase _down (graph (A)). In a case of having no resins, albumin was concentrated, and amylase did not change and the amount thereof was decreased to be relatively smaller than albumin (graph (B)). This graph shows the concentration ratio and the removal rate of contaminants in a case of having no resin additives. It was found that the contaminants were further removed when an additive was added (graphs (C) to (E)). Particularly, it was found that a large part of amylase was removable when SQ was used as the additive (graph (E)).

### <Example 7: improvement of concentration ratio>

In the present example, an agarose gel was used to the separator, a counter substance was added to the eluate in advance, and albumin was concentrated as the target substance from the serum sample.

A diluent of HSA, which was diluted to 20 times, was prepared as the serum sample. 100 µL of 1% agarose was used as the separator. The agarose-mixed gel was supported by a cellulose acetate membrane filter having an opening diameter of 0.2 µm (Advantec Toyo Kaisha, Ltd.).

The counter substances used in the present example are as follows.
RNaseA (MACHEREY-NAGEL GmbH & Co. KG), protein with molecular weight of 13.7 kDa or less, isoelectric point of 8.6
Lysozyme (derived from egg white) (NACALAI TESQUE, INC.), enzyme with molecular weight of 14 kDa, isoelectric point of 11

Both counter substances had an electric charge opposite to the electric charge of albumin and moved in a direction opposite to the direction of albumin by electrophoresis. These counter substances prepared at a plurality of concentrations were added to a Tris-Glycine Buffer as an eluate.

The process electrophoresis was performed at 150 V for 240 minutes.

Thereafter, the eluate was taken out from the elution chamber, and the electrophoresis for measurement was performed. The concentration of each albumin was determined from the density of bands of albumin on the electrophoretic gel photograph.

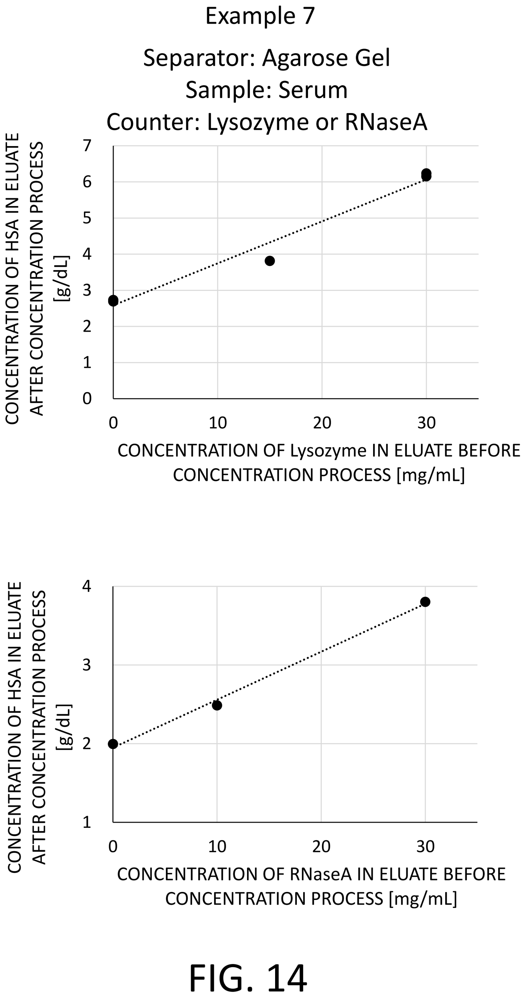

Fig. 14 shows the relationship between the concentration of the counter substance in the initial eluate and the concentration of albumin in the eluate after the process electrophoresis in a case (A) where the counter substance was lysozyme and a case (B) where the counter substance was RNase A. In both cases, the concentration of albumin in the eluate increased substantially in proportion to the concentration of the counter substance. The movement of albumin led to an increase in concentration of albumin in the eluate and a decrease in concentration of albumin in the charging liquid, and as a result, the osmotic pressure was decreased. In this manner, there is a limit to the concentration of albumin in the eluate. However, it was found that since the counter substance moved in a direction opposite to the direction of albumin, the problem of a decrease in osmotic pressure was reduced, and a higher final albumin concentration could be obtained.

### <Example 8: separation and concentration of albumin in saliva>

In the present example, a polyacrylamide gel was used as a separator, and albumin as the target substance was purified from saliva and concentrated.

A Tris-Glycine Buffer (pH of 6.0, hereinafter, referred to as 1× "TMG buffer") having a pH adjusted with maleic acid was used as a buffer for electrophoresis. This 1× TMG buffer was introduced to an elution chamber.

A saliva sample was prepared in the following manner. The saliva was obtained from the inventor and filtered through cotton. After the filtration, 6 mL of the filtered saliva was mixed with 600 µL of a TMG buffer (10× TMG buffer) diluted to 10 times, and the mixture was introduced to the charging chamber by an amount of 2.5 mL each time.

A separator was prepared in the following manner. First, 114 µL of ultrapure water, 20 µL of a 1× TMG buffer with a pH of 6.0, 66 µL of a 30 w/v% acrylamide/bis mixed solution, 2 µL of 10% APS, and 0.8 µL of TMED were mixed with each other, thereby preparing a 10% polyacrylamide gel. 160 µL of the gel was supported by using a filter unit of CELLULOSE ACETATE with a pore size of 0.2 µm (ADVANTEC CO., LTD.).

The process electrophoresis was performed at room temperature and 25 V (maximum current of about 24 mA) for 180 minutes.

The electrophoresis for measurement was performed in the following manner. First, after the process electrophoresis, the eluate was taken out from the elution chamber, and 15 µL of the eluate was mixed with 5 µL of a 4× Loading Buffer (#196-16142, FUJIFILM Wako Pure Chemical Corporation). The mixed solution was heated at 95°C for 10 minutes. 6 µL of the mixed solution was added dropwise to a 5% to 20% polyacrylamide gel (#NTH-576HP10, DRC Co., Ltd.). The electrophoresis was performed on the solution at 180 V for 60 minutes.

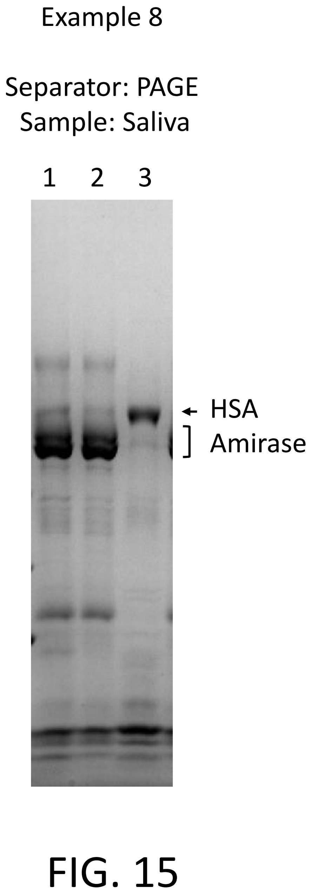

Fig. 15 is an electrophoretic gel photograph. 1, 2, and 3 each correspond to the original saliva sample (1), and the charging liquid (2) and the eluate (3) after the process electrophoresis. The amylase in the saliva sample (1) was somewhat detected in the eluate (3), but most of the amylase remained in the charging liquid (2) of the charging chamber. Meanwhile, a large amount of albumin moved to the eluate (3). In this manner, it was confirmed that albumin in the saliva was separated at least from amylase.

The density of the band of albumin in the eluate after the process electrophoresis was about 12.7 times the density of the band of albumin in the saliva sample before the process electrophoresis. That is, the albumin could be concentrated to 12.7 times by the present process electrophoresis. The volume of the charging chamber was 2.5 mL, the volume of the elution chamber was 150 µL, and the ratio thereof was 17 times when the osmotic pressure was not taken into consideration at all. Therefore, this result indicates that albumin can be concentrated to a high concentration by the above-described method.

### <Example 9: separation of albumin in saliva from macromolecules>

In the present example, a polyacrylamide gel was used as a separator, and albumin was purified from saliva as the target substance and separated from macromolecules in the saliva.

The same buffer for electrophoresis and the same saliva sample as in Example 8 were used. The pH of the eluate and the gel of the separator was adjusted to 8.5.

50 µL of a 1.5% agarose gel was added to the separator and solidified to form a support. A mixed solution of 110 µL of a 10% polyacrylamide gel and a 1× TMG buffer (pH of 8.5) was introduced to the support, and the resultant was prepared after being allowed to stand at 30°C for 20 minutes.

The process electrophoresis was performed at room temperature and 100 V (maximum current of about 24 mA) for 30 minutes. A 1× TMG buffer (pH of 7.5) was used as the buffer for electrophoresis.

The electrophoresis for measurement was performed in the following manner. First, after the process electrophoresis, the eluate was taken out from the elution chamber, and 15 µL of the eluate was mixed with 5 µL of a 4× Loading Buffer (#196-16142, FUJIFILM Wako Pure Chemical Corporation). The mixed solution was heated at 95°C for 10 minutes. 3 µL of the mixed solution was added dropwise to a 5% to 20% polyacrylamide gel (#NTH-576HP10, DRC Co., Ltd.). The electrophoresis was performed on the solution at 180 V for 60 minutes.

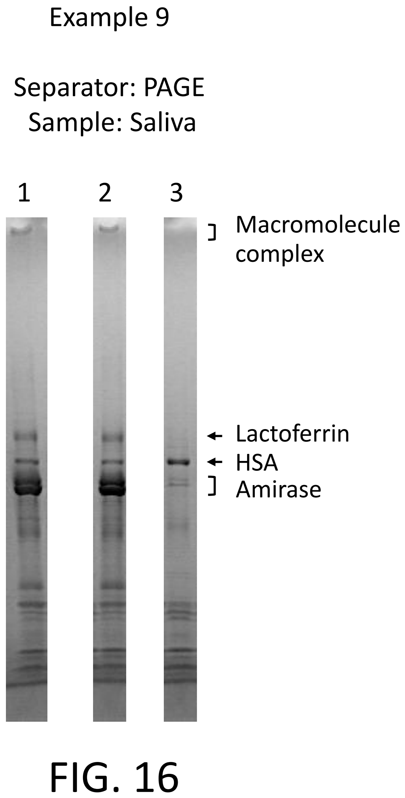

Fig. 16 is an electrophoretic gel photograph. 1, 2, and 3 each correspond to the original saliva sample (1), and the charging liquid (2) and the eluate (3) after the process electrophoresis. The amylase and lactoferrin in the saliva sample (1) was somewhat detected in the eluate (3), but most of the amylase and lactoferrin remained in the charging liquid (2) of the charging chamber. Meanwhile, a large amount of albumin moved to the eluate (3). In this manner, it was confirmed that albumin in the saliva was separated at least from amylase and lactoferrin.

Macromolecules and macrocomplexes were present in the saliva sample (1). The macromolecules are assumed to contain mucin. In this manner, it was possible to inhibit the macromolecules from moving to the elution chamber. For example, the movement of the macromolecules to the elution chamber can be inhibited by adjusting the pH of the charging chamber. For example, the movement of the macromolecules to the elution chamber can be inhibited by using a separator having a mesh structure with a relatively small mesh diameter, such as polyacrylamide. These methods may be used in combination.

Lactoferrin has an isoelectric point of 8.8 and is in a slightly positively charged state or in an uncharged state with respect to the pH (8.5) of the solution in the present example. Therefore, it was considered that the lactoferrin moved in a direction opposite to the direction of albumin, did not move, or at least did not move to the elution chamber.

Removal of low molecules was not intended in the present example, but is possible. For example, the separator may contain a resin that captures low molecules or decreases the movement speed of low molecules (resin and the like used for gel filtration chromatography or size exclusion chromatography such as Sephacryl (registered trademark)). For example, the resin that captures low molecules may be mixed with the gel of the separator. For example, a gel layer of a polyacrylamide gel may be laminated on a layer containing the resin that captures low molecules. With such a configuration, the separator captures not only relatively large molecules such as mucin and lactoferrin, but also contaminants of low molecules, and allows passage of the target substance. In this manner, the target substance (for example, albumin) can be purified.

### <Example 10: separation of albumin and hemoglobin in whole blood>

In the present example, albumin and hemoglobin as the target substance were separated from a whole blood sample using a polyacrylamide gel as a separator.

A Tris-Glycine Buffer (pH of 5.2, hereinafter, referred to as 1× "TMG buffer") having a pH adjusted with maleic acid was used as a buffer for electrophoresis. This 1× TMG buffer was introduced to the elution chamber.

The whole blood sample was prepared in the following manner. 30 µL of fingertip blood (whole blood) was obtained from the inventor with a blood collecting tube, mixed with 270 µL of a 1× TMG buffer (containing 0.1% Triton X-100), and allowed to stand at room temperature for 1 hour. In this manner, the whole blood sample was hemolyzed. 300 µL of this hemolyzed sample was diluted with 11700 µL of a 1× TMG buffer.

The separator was prepared in the following manner. First, 114 µL of ultrapure water, 20 µL of a 1× TMG buffer with a pH of 5.2, 66 µL of a 30 w/v% acrylamide/bis mixed solution, 2 µL of 10% APS, and 0.8 µL of TMED were mixed with each other, thereby preparing a 10% polyacrylamide gel. 160 µL of the gel was supported by using a filter unit of CELLULOSE ACETATE with a pore size of 0.2 µm (ADVANTEC CO., LTD.).

The process electrophoresis was performed under cooling at 90 V for 20 minutes, subsequently 80 V for 60 minutes, and subsequently 90 V for 20 minutes.

The electrophoresis for measurement was performed in the following manner. First, after the process electrophoresis, the eluate was taken out from the elution chamber, and 15 µL of the eluate was mixed with 5 µL of a 4× Loading Buffer (#196-16142, FUJIFILM Wako Pure Chemical Corporation). The mixed solution was heated at 95°C for 10 minutes. 3 µL of the mixed solution was added dropwise to a 5% to 20% polyacrylamide gel (#NTH-576HP10, DRC Co., Ltd.). The electrophoresis was performed on the solution at 180 V for 60 minutes.

Albumin and hemoglobin moved in opposite directions at this pH. Originally, two elution chambers should be disposed for the charging chamber in a direction of the applied voltage. However, one elution chamber was provided for the charging chamber in the setting of the present example. Here, the method of applying the voltage was applied by being changed for each of albumin and hemoglobin. Hereinafter, in the setting of the present example, a direction in which the voltage for eluting albumin is applied will be referred to as "forward direction", and a direction in which the voltage for eluting hemoglobin is applied will be referred to as "backward direction".

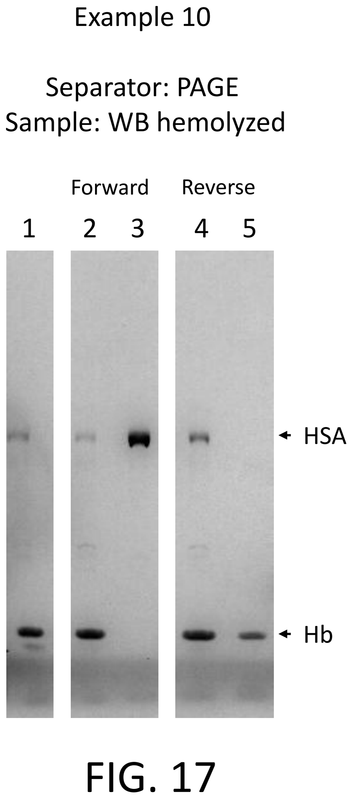

Fig. 17 is an electrophoretic gel photograph. 1 to 5 each correspond to the original whole blood sample (1), the charging liquid (2) and the eluate (3) after the process electrophoresis in the forward direction, and the charging liquid (4) and the eluate (5) after the process electrophoresis in the backward direction.

As is evident from the bands of the eluate (3) and the eluate (5), albumin and hemoglobin were separated in the eluates. Further, at least the albumin was concentrated at the same time. As shown in the results, the present method enables separation and purification of albumin and hemoglobin at the same time.

### <Example 11: electrophoretic unit>

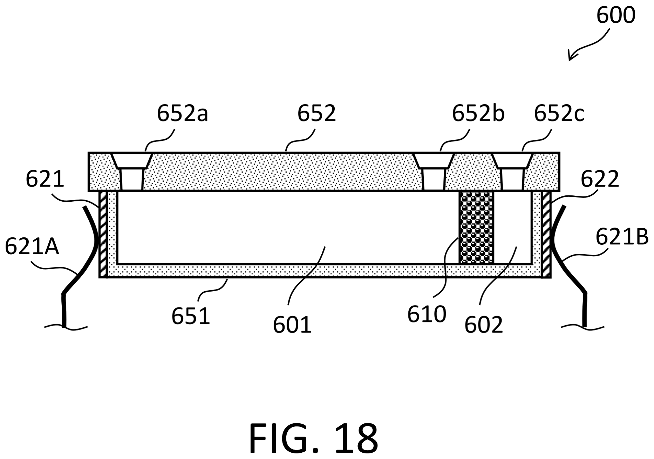

Fig. 18 is a cross-sectional view showing an electrophoretic unit 600 according to an example in a length direction. The electrophoretic unit 600 includes an electrophoresis tank 651 in the length direction, a top plate 652 covering the electrophoresis tank 651 from above, and a separator 610 disposed in the electrophoresis tank 651. A charging chamber 601 that accommodates a sample solution and an elution chamber 601 that accommodates an eluate are defined by the electrophoresis tank 651, the top plate 652, and the separator 610 through the separator 610. The volumes of the charging chamber 601 and the elate or the ratio therebetween may be set based on the desired concentration ratio.

The electrophoresis tank 651 may be formed such that a cross section perpendicular to the length direction has a circular shape or a U shape. In this manner, an electric field can be uniformly applied, and thus waste in the movement of the substance can be suppressed. Further, a large contact area in a case of being in contact with a heat sink or fluid (air) for temperature control from the outside can be ensured. The electrophoresis tank 651 may be configured to be in contact with a heat sink, irradiated with electromagnetic waves such as light, or blown with air from the outside. In this manner, the temperature of the solution therein may be adjusted. The electrophoresis tank 651 may be formed of a high thermal conductivity material.

The electrophoresis tank 651 includes electrodes 621 and 622 on both end surfaces in the length direction. The electrodes 621 and 622 may be fixed to the electrophoresis tank 651.

For example, the electrodes 621 and 622 may be formed of a metal flat plate. The metal flat plates 621 and 622 may be bonded to both end surfaces of the electrophoresis tank 651. For example, the electrodes 621 and 622 may be formed by depositing a material such as platinum using plating. The electrodes 621 and 622 may be formed of external members to be brought into contact with or to be in close proximity to both end surfaces of the electrophoresis tank 651 during the process electrophoresis.

### <Example 12: cartridge>

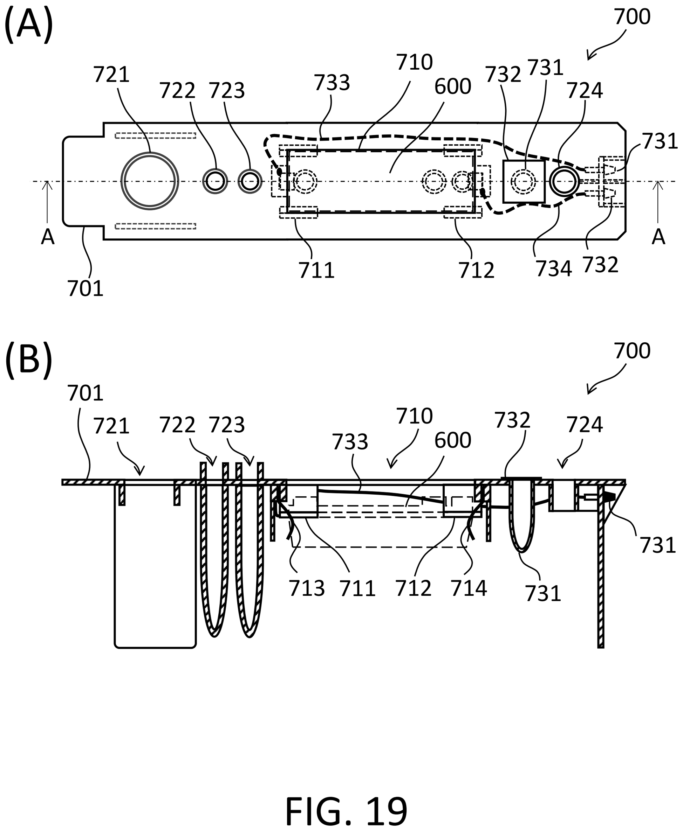

Fig. 19 shows an example of a pipette cartridge 700 including the electrophoretic unit 600 of the above-described example. Fig. 19(A) is a top view showing the pipette cartridge 700, and Fig. 19(B) is a cross-sectional view taken along line A-A shown in (A). The pipette cartridge 700 is provided with an electrophoretic unit fixing portion 710 for fitting and fixing the electrophoretic unit 600 to a plate (main body) 701. The electrophoretic unit fixing portion 710 is opened by the plate 701 so that the electrophoretic unit 600 is inserted into the opening. The electrophoretic unit 600 is fixed by locking pins 711 and 712 fixed to the plate 701 at four corners of the opening.

Plate springs 713 and 714 for electrode contact are disposed at each of both ends of the electrophoretic unit fixing portion 710 in a longitudinal direction. The electrodes 621 and 622 at both ends of the electrophoretic unit 600 inserted and fixed to the opening of the electrophoretic unit fixing portion 710 are each brought into contact with the plate springs 713 and 714 for electrode contact to form an electrical connection. The plate springs 713 and 714 are each connected, via electric wires 733 and 734, to connectors 731 and 732 fixed to the leading end of the plate 701 in the longitudinal direction. The connectors 731 and 732 are provided such that the pipette cartridge 700 is inserted into a main body of an automatic pipette device (not shown) from the leading end of the pipette cartridge 700 and comes into contact with a stopper that stops the leading end of the pipette cartridge 700. A contact portion (not shown) that is in contact with the connectors 731 and 732 is provided on the end surface of the stopper. The power can be supplied to the electrophoretic unit 600 by establishing the electrical connection between the connectors 731 and 732 and the contact portion.

In Fig. 19, the electrical connection between the electrophoretic unit 600 and the outside is established between the plate springs 713 and 714 and the connectors 731 and 732, but the aspect of the electrical connection is not limited thereto. For example, a power supply unit having plate springs is disposed in the main body of the automatic pipette device, the power supply unit moves to the inserted cartridge 700, and the plate springs may come into contact with the electrodes 621 and 622 at both ends of the electrophoretic unit 600.

In some embodiments, the pipette cartridge may be provided with a well for measurement, a well accommodating a solution required for measurement, a hole and the like for holding a pipette tip, a tube, and the like. In some embodiments, a sensor may be attached to the pipette cartridge.

The pipette cartridge 700 shown in Fig. 19 includes a sample container holder 721 for placing a container of a sample to be subjected to the electrophoretic process, a tip holder 722 for a sample for placing a tip for a sample that is taken out from the sample container and introduced to the charging chamber of the electrophoretic unit 600, and a tip holder 723 for an eluate for disposing a tip for an eluate that is used to take out a solution from the elution chamber after the electrophoretic process. Further, the pipette cartridge 700 includes a buffer well 731 that accommodates a buffer used in the electrophoretic process, and the buffer well 731 is sealed with a sealing membrane 732 until use so that the buffer (not shown) inside the buffer well 731 is sealed. The sealing membrane is, for example, an aluminum membrane, and the pipette tip can easily penetrate this membrane and obtain the buffer inside the buffer well 731. The pipette cartridge 700 includes a tube holder 714 for an eluate that is used for placing a tube for recovering the eluate after the process. The treatment liquid after the electrophoretic process can be transferred to the inside of the tube for an eluate and move to another place from the pipette cartridge 700 together with the tube.

For example, the pipette cartridge 700 and/or the automatic pipette device may be configured to control the temperature of the electrophoretic unit 600. For example, a temperature-controlled heat sink is disposed in the automatic pipette device, moves to the inserted cartridge 700, and comes into close contact with the electrophoresis tank 651 of the electrophoretic unit 600. Alternatively, for example, the automatic pipette device may allow a temperature-controlled fluid (for example, cooled air) to be brought into contact with the surface of the electrophoresis tank 651. In this manner, the temperature of the solution during the electrophoretic process can be efficiently controlled as appropriate. In some embodiments, the temperature of the electrophoresis tank 651 and the temperature of the solution during the electrophoretic process may be measured and automatically controlled.

In some embodiments, a (non-mounting) pipette cartridge for mounting the electrophoretic unit may be provided. In some embodiments, a pipette cartridge (including the electrophoretic unit) on which the electrophoretic unit is mounted may be provided.

The present disclosure also provides the following embodiments.

A001 A method of treating a target substance by electrophoresis, the method including:
providing a separator that allows passage of a target substance;
introducing a first solution containing the target substance to a first side of the separator;
introducing a second solution to a second side of the separator; and
selectively moving the target substance by electrophoresis from the first solution to the second solution through the separator.

A001b A method of treating a target substance by electrophoresis, the method including:
providing a separator that allows passage of any one of a target substance or a contaminant;
introducing a first solution containing the target substance and the contaminant to a first side of the separator;
introducing a second solution to a second side of the separator; and
selectively moving any one of the target substance or the contaminant by electrophoresis from the first solution to the second solution through the separator.

A002 The method according to A001, A001b, or any one of the embodiments,
wherein the method of treating the target substance is carried out by performing at least one of
concentrating the target substance;
exchanging buffers of the target substance; and
purifying the target substance.

A003 The method according to A001 or any one of the embodiments,
wherein the method of treating the target substance is carried out by simultaneously performing a plurality of steps of
concentrating the target substance;
exchanging buffers of the target substance; and
purifying the target substance.

A004 The method according to A001 or any one of the embodiments,
wherein the method of treating the target substance is carried out by simultaneously performing
concentrating the target substance; and
purifying the target substance.

A005 The method according to A003 or A004, or any one of the embodiments,
wherein the simultaneously performing includes performing the steps by one-dimensional electrophoresis.

A007 The method according to any one of A001 to A003, or any one of the embodiments,
wherein the separator includes a substance selected from the group consisting of a gel, a semipermeable membrane, and a resin.

A008 The method according to any one of A001 to A007, or any one of the embodiments,
wherein the separator includes an agarose gel.

A011 The method according to A001 or any one of the embodiments,
wherein a second volume of the second solution is less than a first volume of the first solution.

A012 The method according to A001 or A011, or any one of the embodiments,
wherein the biomolecules are concentrated by the method.

A015 The method according to any one of A001 to A012, or any one of the embodiments, the method further including:
introducing a substance (counter substance) that moves in a direction opposite to a direction of the target substance by electrophoresis, to the second solution,
wherein the selectively moving of the target substance by electrophoresis includes simultaneously moving the counter substance from the second solution to the first solution through the separator by electrophoresis.

A016 The method according to A015 or any one of the embodiments,
wherein the counter substance has an electric charge opposite to an electric charge of the target substance.

A017 The method according to A015 or A016, or any one of the embodiments,
wherein the counter substance is a polymer.

A018 The method according to A017 or any one of the embodiments,
wherein the counter substance is a biopolymer.

A019 The method according to A018 or any one of the embodiments,
wherein the counter substance is a protein or an enzyme.

A021 The method according to A001 or any one of the embodiments,
wherein a first solvent (first buffer) of the first solution is different from a second solvent (second buffer) of the second solution.

A031 The method according to A001 or any one of the embodiments,
wherein the separator selectively passes the target substance or allows selective passage of the target substance.

A031b The method according to A001b or any one of the embodiments,
wherein the separator selectively passes the contaminant or allows selective passage of the target substance.

A032 The method according to A031 or any one of the embodiments,
wherein the separator has an ability to suppress, prevent, or block the passage of at least one contaminant.

A041 The method according to A031 or A032, or any one of the embodiments,
wherein the separator includes a gel that selectively passes the target substance through.

A042 The method according to A041 or any one of the embodiments,
wherein the gel is a polyacrylamide gel.

A051 The method according to A031 or A032, or any one of the embodiments,
wherein the separator includes a semipermeable membrane that selectively passes the target substance through.

A061 The method according to any one of A001 to A051 or any one of the embodiments,
wherein the separator, the first solution, or the first solution chamber (charging chamber) includes a selective substance having an ability to allow selective passage of the target substance through the separator, and/or to suppress, prevent, or block passage of at least one contaminant through the separator.

A061b The method according to any one of A001b to A051 or any one of the embodiments,
wherein the separator, the first solution, or the first solution chamber (charging chamber) includes a selective substance having an ability to allow selective passage of at least one contaminant through the separator, and/or to suppress, prevent, or block passage of the target substance through the separator.

A062 The method according to any one of A001 to A047 or any one of the embodiments, the method further including:
mixing a selective substance into the first solution before the electrophoresis.

A063 The method according to A061 or A062, or any one of the embodiments,
wherein the selective substance has an ability to purify a protein.

A064 The method according to any one of A061 to A063 or any one of the embodiments,
wherein the selective substance or the resin for purifying a protein is selected from the group consisting of hydroxyapatite, a cation exchange carrier, an anion exchange carrier, and a hydrophobic resin.

A071 The method according to A001 or any one of the embodiments,
wherein the first solution has a pH greater (higher) or less (lower) than an isoelectric point of the target substance,
the target substance has a negative or positive electric charge, and
the selectively moving by electrophoresis includes applying an electric field such that a side of first solution is negatively or positively charged and a side of the second solution is positively or negatively charged.

A072 The method according to A071 or any one of the embodiments,
wherein the first solution has a pH which is the same or higher than an isoelectric point of at least one contaminant contained in the first solution.

A081 A method of treating a target substance by electrophoresis, the method including:
providing a first separator that allows passage of a target substance;
introducing a first solution containing the target substance to a first side of the first separator;
introducing a second solution to a second side of the first separator and a first side of a second separator;
introducing a third solution to a second side of the second separator;
selectively moving the target substance by electrophoresis from the first solution to the second solution through the first separator; and
moving the target substance by electrophoresis from the second solution to the third solution through the second separator.

A081b A method of treating a target substance by electrophoresis, the method including:
providing a first separator that allows passage of a first target substance and a second separator that allows passage of a second target substance;
introducing a first solution containing the first target substance and the second target substance between the first separator and the second separator;
selectively moving the first target substance by electrophoresis from the first solution to a side opposite to the first separator through the first separator; and
moving the second target substance by electrophoresis from the first solution to a side opposite to the second separator through the second separator.

A082 The method according to A081b or any one of the embodiments,
wherein the solution has a pH that is between an isoelectric point of the first target substance and an isoelectric point of the second target substance.

A091 The method according to any one of A001 to A082 or any one of the embodiments,
wherein the first solution contains the target substance and a low-molecular-weight contaminant having a molecular weight less than a molecular weight of the target substance, and
wherein the electrophoresis includes repeatedly applying a forward electric field and applying a backward electric field in a direction in which the target substance and the low-molecular-weight contaminant pass through the separator and move to the second solution.

A092 The method according to A091 or any one of the embodiments,
wherein said repeatedly applying of the forward electric field and applying of the backward electric field includes promoting return of the low-molecular-weight contaminant to the first solution.

A101 The method according to any one of A001 to A081b or any one of the embodiments,
wherein the first solution is a solution derived from a living body.

A102 The method according to any one of A001 to A081b or any one of the embodiments,
wherein the first solution is a crude sample.

A103 The method according to A101 or 102, or any one of the embodiments,
wherein the first solution is a solution derived from a living body, selected from the group consisting of blood, saliva, tears, urine, and intercellular lymph.

A111 The method according to any one of A001 to A103 or any one of the embodiments,
wherein the target substance is a biomolecule contained in the first solution.

A112 The method according to any one of A001 to A103 or any one of the embodiments,
wherein the target substance is albumin contained in the first solution.

B001 A device that treats a target substance by electrophoresis, the device including:
a first solution chamber (charging chamber);
a second solution chamber (elution chamber) that is adjacent to the first solution chamber (charging chamber); and
a separator that separates the first solution chamber and the second solution chamber from each other, allows a target substance to pass from the first solution chamber to the second solution chamber, and has electrical conductivity,
wherein the first solution chamber is filled with a first solution containing the target substance,
the second solution chamber is filled with a second solution, and
an electric field is applied from outside the first solution chamber and the second solution chamber so that the target substance is allowed to selectively move by electrophoresis from the first solution chamber to the second solution chamber through the separator.

B001b A device that treats a target substance by electrophoresis, the device including:
a first solution chamber (charging chamber);
a second solution chamber (elution chamber) that is adjacent to the first solution chamber (charging chamber); and
a separator that separates the first solution chamber and the second solution chamber from each other, allows any one of a target substance or a contaminant to pass from the first solution chamber to the second solution chamber, and has electrical conductivity,
wherein the first solution chamber is filled with a first solution containing the target substance and the contaminant,
the second solution chamber is filled with a second solution, and
an electric field is applied from outside the first solution chamber and the second solution chamber so that any one of the target substance or the contaminant is allowed to selectively move by electrophoresis from the first solution chamber to the second solution chamber through the separator.

B002 The device according to B001, further including:
an electrode pair configured to apply an electric field from outside the first solution chamber and the second solution chamber.

B011 The device according to B001 or B002, or any one of the embodiments,
wherein a second volume of the second solution chamber is less than a first volume of the first solution chamber.

B021 The device according to B001 or B002, or any one of the embodiments,
wherein a first solvent (first buffer) of the first solution is different from a second solvent (second buffer) of the second solution.

B031 The device according to B001 or B002, or any one of the embodiments,
wherein the separator selectively passes the target substance or allows selective passage of the target substance.

B032 The device according to B031 or any one of the embodiments,
wherein the separator has an ability to suppress, prevent, or block the passage of at least one contaminant.

B041 The device according to B031 or A032, or any one of the embodiments,
wherein the separator includes a gel that selectively passes the target substance through.

B042 The device according to B041 or any one of the embodiments,
wherein the gel is a polyacrylamide gel.

B051 The device according to B031 or B032, or any one of the embodiments,
wherein the separator includes a semipermeable membrane that selectively passes the target substance through.

B061 The device according to any one of B001 to B051 or any one of the embodiments,
wherein the separator, the first solution, or the first solution chamber (charging chamber) includes a selective substance having an ability to allow selective passage of the target substance through the separator, and/or to suppress, prevent, or block passage of at least one contaminant through the separator.

B062 The device according to any one of B031 to B047 or any one of the embodiments,
configured to mix the selective substance into the first solution before the electrophoresis.

B063 The device according to B051 or B052, or any one of the embodiments,
wherein the selective substance is a resin for purifying a protein.

B064 The device according to any one of B051 to B053 or any one of the embodiments,
wherein the selective substance or the resin for purifying a protein is selected from the group consisting of hydroxyapatite, a cation exchange carrier, an anion exchange carrier, and a hydrophobic resin.

B081 A device that treats a target substance by electrophoresis, the device including:
a first solution chamber (charging chamber);
a second solution chamber (first elution chamber) that is adjacent to the first solution chamber (charging chamber);
a third solution chamber (second elution chamber) that is adjacent to the second solution chamber (first elution chamber);
a first separator that separates the first solution chamber and the second solution chamber from each other, allows a target substance to pass from the first solution chamber to the second solution chamber, and has electrical conductivity; and
a second separator that separates the second solution chamber and the third solution chamber from each other, allows the target substance to pass from the second solution chamber to the third solution chamber, and has electrical conductivity.

C001 A method of treating a target substance by electrophoresis, the method including:
providing the electrophoretic device according to any one of the embodiments B001 to B064 or any one of embodiments;
filling the first solution chamber with a first solution containing a target substance;
filling the second solution chamber with a second solution; and
applying an electric field from outside the first solution chamber and the second solution chamber and selectively moving the target substance by electrophoresis from the first solution chamber to the second solution chamber through the separator.

C081 A method of treating a target substance by electrophoresis, the method including:
providing the electrophoretic device according to B081 or any one of embodiments;
filling the first solution chamber with a first solution containing a target substance;
filling the second solution chamber with a second solution;
filling the third solution chamber with a third solution;
applying an electric field from outside the first solution chamber and the second solution chamber and selectively moving the target substance by electrophoresis from the first solution chamber to the second solution chamber through the first separator; and
applying an electric field from outside the second solution chamber and the third solution chamber and selectively moving the target substance by electrophoresis from the second solution chamber to the third solution chamber through the second separator.

The preferred embodiments of the present invention have been described in the present specification, but it will be obvious to those skilled in the art that such embodiments are provided only as examples. The present invention is not intended to be limited to the specific examples provided in the present specification. The present invention has been described with reference to the specification above, but the description of the embodiments in the present specification and the accompanying drawings thereof are not intended to be construed in a limiting sense. Various modifications, changes, and substitutions will occur to those skilled in the art without departing from the scope of the present invention. Further, it should be understood that all the aspects of the present invention are not limited to the specific depictions, configurations, or relative proportions described in the present specification depending on various conditions and variables. It should be understood that various alternatives to the embodiments of the present invention described in the present specification can be used when implementing the present invention. Therefore, the present invention is considered to also include such alternative forms, correction forms, modification forms, and equivalents. It is intended that the scope of the following claims defines the scope of the present invention and that the methods, structures, and equivalents thereof in the scope of the claims are covered by the scope of the present invention.

## Claims

1. A method of treating a target substance by electrophoresis, the method comprising:
providing a separator that allows passage of a target substance;
introducing a first solution containing the target substance to a first side of the separator;
introducing a second solution to a second side of the separator; and
selectively moving the target substance by electrophoresis from the first solution to the second solution through the separator.

2. The method according to Claim 1,
wherein the method of treating the target substance is carried out by simultaneously performing a plurality of steps of
concentrating the target substance;
exchanging buffers of the target substance; and
purifying the target substance.

3. The method according to Claim 2,
wherein the simultaneously performing includes performing the steps by one-dimensional electrophoresis.

4. The method according to Claim 1,
wherein a second volume of the second solution is less than a first volume of the first solution.

5. The method according to any one of Claims 1 to 4 or any one of the embodiments, the method further comprising:
introducing a counter substance that moves in a direction opposite to a direction of the target substance by electrophoresis, to the second solution,
wherein the selectively moving of the target substance by electrophoresis includes simultaneously moving the counter substance from the second solution to the first solution through the separator by electrophoresis.

6. The method according to Claim 5,
wherein the counter substance has an electric charge opposite to an electric charge of the target substance.

7. The method according to Claim 1,
wherein a first solvent (first buffer) of the first solution is different from a second solvent (second buffer) of the second solution.

8. The method according to Claim 1,
wherein the separator selectively passes the target substance or allows selective passage of the target substance.

9. The method according to Claim 8,
wherein the separator includes a gel that selectively passes the target substance.

10. The method according to Claim 9,
wherein the gel is a polyacrylamide gel.

11. The method according to Claim 8,
wherein the separator includes a semipermeable membrane that selectively passes the target substance.

12. The method according to Claim 1,
wherein the separator or the first solution chamber (charging chamber) includes a selective substance having an ability to allow selective passage of the target substance through the separator, and/or to suppress, prevent, or block passage of at least one contaminant through the separator.

13. The method according to Claim 1, further comprising:
mixing a selective substance into the first solution before the electrophoresis.

14. The method according to Claim 12 or 13,
wherein the selective substance has an ability to purify a protein.

15. The method according to Claim 12 or 13,
wherein the selective substance is selected from the group consisting of hydroxyapatite, a cation exchange carrier, an anion exchange carrier, and a hydrophobic resin.

16. The method according to Claim 1,
wherein the first solution has a pH greater (higher) or less (lower) than an isoelectric point of the target substance,
the target substance has a negative or positive electric charge, and
the selectively moving by electrophoresis includes applying an electric field such that a side of first solution is negatively or positively charged and a side of the second solution is positively or negatively charged.

17. The method according to Claim 16,
wherein the first solution has a pH which is the same or greater than an isoelectric point of at least one contaminant contained in the first solution.

18. The method according to Claim 1,
wherein the first solution is a solution derived from a living body.

19. The method according to Claim 18,
wherein the first solution is a crude sample.

20. The method according to Claim 18 or 19,
wherein the first solution is a solution derived from a living body, selected from the group consisting of blood, saliva, tears, urine, and intercellular lymph.

21. The method according to Claim 20,
wherein the target substance is a biomolecule contained in the first solution.

22. The method according to Claim 21,
wherein the target substance is albumin contained in the first solution.

23. A device that treats a target substance by electrophoresis, the device comprising:
a first solution chamber;
a second solution chamber that is adjacent to the first solution chamber; and
a separator that separates the first solution chamber and the second solution chamber from each other, allows a target substance to pass from the first solution chamber to the second solution chamber, and has electrical conductivity,
wherein the first solution chamber is filled with a first solution containing the target substance,
the second solution chamber is filled with a second solution, and
an electric field is applied from outside the first solution chamber and the second solution chamber so that the target substance is allowed to selectively move by electrophoresis from the first solution chamber to the second solution chamber through the separator.

24. The device according to Claim 23, further comprising:
an electrode pair configured to apply an electric field from outside the first solution chamber and the second solution chamber.

25. The device according to Claim 23 or 24,
wherein a second volume of the second solution chamber is less than a first volume of the first solution chamber.

26. The device according to Claim 23 or 24,
wherein the separator selectively passes the target substance or allows selective passage of the target substance.

27. The device according to Claim 26,
wherein the separator includes a gel that selectively passes the target substance.

28. The device according to Claim 26,
wherein the separator includes a semipermeable membrane that selectively passes the target substance.

29. The device according to Claim 23 or 24,
wherein the separator or the first solution chamber includes a selective substance having an ability to allow selective passage of the target substance through the separator, and/or to suppress, prevent, or block passage of at least one contaminant through the separator.

30. The device according to Claim 23 or 24,
wherein the device is configured to mix the selective substance into the first solution before the electrophoresis.

31. A device that treats a target substance by electrophoresis, the device comprising:
a first solution chamber;
a second solution chamber that is adjacent to the first solution chamber;
a third solution chamber that is adjacent to the second solution chamber;
a first separator that separates the first solution chamber and the second solution chamber from each other, allows a target substance to pass from the first solution chamber to the second solution chamber, and has electrical conductivity; and
a second separator that separates the second solution chamber and the third solution chamber from each other, allows the target substance to pass from the second solution chamber to the third solution chamber, and has electrical conductivity.

32. A method of treating a target substance by electrophoresis, the method comprising:
providing the electrophoretic device according to any one of Claims 23 to 31;
filling the first solution chamber with a first solution containing a target substance;
filling the second solution chamber with a second solution; and
applying an electric field from outside the first solution chamber and the second solution chamber and selectively moving the target substance by electrophoresis from the first solution chamber to the second solution chamber through the separator.

## Amended claims

### Amended claims under Art. 19.1 PCT

1. [Amended] A method of treating a target substance by electrophoresis, the method comprising:
providing a separator that allows passage of a target substance and includes a gel;
introducing a first solution containing the target substance to a first side of the separator;
introducing a second solution to a second side of the separator; and
selectively moving the target substance by electrophoresis from the first solution to the second solution through the separator.

2. The method according to Claim 1,
wherein the method of treating the target substance is carried out by simultaneously performing a plurality of steps of
concentrating the target substance;
exchanging buffers of the target substance; and
purifying the target substance.

3. The method according to Claim 2,
wherein the simultaneously performing includes performing the steps by one-dimensional electrophoresis.

4. The method according to Claim 1,
wherein a second volume of the second solution is less than a first volume of the first solution.

5. The method according to any one of Claims 1 to 4, or any one of embodiments, the method further comprising:
introducing a counter substance that moves in a direction opposite to a direction of the target substance by electrophoresis, to the second solution,
wherein the selectively moving of the target substance by electrophoresis includes simultaneously moving the counter substance from the second solution to the first solution through the separator by electrophoresis.

6. The method according to Claim 5,
wherein the counter substance has an electric charge opposite to an electric charge of the target substance.

7. The method according to Claim 1,
wherein a first solvent of the first solution (first buffer) is different from a second solvent of the second solution (second buffer).

8. The method according to Claim 1,
wherein the separator selectively passes the target substance or allows selective passage of the target substance.

9. [Canceled]

10. [Amended] The method according to Claim 1,
wherein the gel is a polyacrylamide gel.

11. The method according to Claim 8,
wherein the separator includes a semipermeable membrane that selectively passes the target substance.

12. The method according to Claim 1,
wherein the separator or the first solution chamber (charging chamber) includes a selective substance having an ability to allow selective passage of the target substance through the separator, and/or to suppress, prevent, or block passage of at least one contaminant through the separator.

13. The method according to Claim 1, further comprising:
mixing a selective substance into the first solution before the electrophoresis.

14. The method according to Claim 12 or 13,
wherein the selective substance has an ability to purify a protein.

15. The method according to Claim 12 or 13,
wherein the selective substance is selected from the group consisting of hydroxyapatite, a cation exchange carrier, an anion exchange carrier, and a hydrophobic resin.

16. The method according to Claim 1,
wherein the first solution has a pH greater (higher) or less (lower) than an isoelectric point of the target substance,
the target substance has a negative or positive electric charge, and
the selectively moving by electrophoresis includes applying an electric field such that a side of first solution is negatively or positively charged and a side of the second solution is positively or negatively charged.

17. The method according to Claim 16,
wherein the first solution has a pH which is the same or greater than an isoelectric point of at least one contaminant contained in the first solution.

18. The method according to Claim 1,
wherein the first solution is a solution derived from a living body.

19. The method according to Claim 18,
wherein the first solution is a crude sample.

20. The method according to Claim 18 or 19,
wherein the first solution is a solution derived from a living body, selected from the group consisting of blood, saliva, tears, urine, and intercellular lymph.

21. The method according to Claim 20,
wherein the target substance is a biomolecule contained in the first solution.

22. The method according to Claim 21,
wherein the target substance is albumin contained in the first solution.

23. [Amended] A device that treats a target substance by electrophoresis, the device comprising:
a first solution chamber;
a second solution chamber that is adjacent to the first solution chamber; and
a separator that separates the first solution chamber and the second solution chamber from each other, allows a target substance to pass from the first solution chamber to the second solution chamber, has electrical conductivity, and includes a gel,
wherein the first solution chamber is filled with a first solution containing the target substance,
the second solution chamber is filled with a second solution, and
an electric field is applied from outside the first solution chamber and the second solution chamber so that the target substance is allowed to selectively move by electrophoresis from the first solution chamber to the second solution chamber through the separator.

24. The device according to Claim 23, further comprising:
an electrode pair configured to apply an electric field from outside the first solution chamber and the second solution chamber.

25. The device according to Claim 23 or 24,
wherein a second volume of the second solution chamber is less than a first volume of the first solution chamber.

26. The device according to Claim 23 or 24,
wherein the separator selectively passes the target substance or allows selective passage of the target substance.

27. [Canceled]

28. The device according to Claim 26,
wherein the separator includes a semipermeable membrane that selectively passes the target substance.

29. The device according to Claim 23 or 24,
wherein the separator or the first solution chamber includes a selective substance having an ability to allow selective passage of the target substance through the separator, and/or to suppress, prevent, or block passage of at least one contaminant through the separator.

30. The device according to Claim 23 or 24,
wherein the device is configured to mix the selective substance into the first solution before the electrophoresis.

31. [Amended] A device that treats a target substance by electrophoresis, the device comprising:
a first solution chamber;
a second solution chamber that is adjacent to the first solution chamber;
a third solution chamber that is adjacent to the second solution chamber;
a first separator that separates the first solution chamber and the second solution chamber from each other, allows a target substance to pass from the first solution chamber to the second solution chamber, has electrical conductivity, and includes a gel; and
a second separator that separates the second solution chamber and the third solution chamber from each other, allows the target substance to pass from the second solution chamber to the third solution chamber, has electrical conductivity, and includes a gel.

32. A method of treating a target substance by electrophoresis, the method comprising:
providing the electrophoretic device according to any one of Claims 23 to 31;
filling the first solution chamber with a first solution containing a target substance;
filling the second solution chamber with a second solution; and
applying an electric field from outside the first solution chamber and the second solution chamber and selectively moving the target substance by electrophoresis from the first solution chamber to the second solution chamber through the separator.

Statement under Art. 19.1 PCT
1. Explanation of patentability
The written opinion of the International Searching Authority states that in regard to the members of "separator", "there is no particular difficulty in itself for those skilled in the art to identify the points such as 'gel', 'polyacrylamide gel', 'semipermeable membrane', and the like".
First, the applicant will explain the inventive step of the invention of the present application after amendments to References 1 and 2 in the written opinion.
   1-1) Regarding Reference 1
      Reference 1 discloses that a nanopore chip having liquid passages (nanopores) is used as a partition wall separating liquid chambers from each other. Here, one of the major problems of the nanopores is pore clogging. It is obvious to those skilled in the art that the nanopores will be clogged with the configuration described in Reference 1, and there is no motivation to use the same configuration in the separation technology in the first place. In fact, Reference 1 does not disclose any measurement results to prove that "mixed particles with different sizes can be separated". Reference 1 is limited to the nanopore technology and thus does not disclose or suggest use of "gel" in the separator of the invention of the present application.
   1-2) Regarding Reference 2
      In regard to Reference 2, the written opinion states that "the same applies to Reference 2 (see [Fig. 7], etc.)". However, even in consideration of the description (0043, 0045) of Fig. 7 pointed out by the examiner, Reference 2 discloses a so-called nanopore analysis technology of "analyzing" "particles (cells, etc.)" that pass through "pores" of "membrane".
      Therefore, Reference 2 is required to use "membrane" having a predetermined thickness, and Reference 2 does not disclose or suggest use of "gel" as "membrane".
      Further, the use of "gel" hinders "improvement of analytical precision" (background art, 0002) which is the goal of the technology in Reference 2.
   1-3) Explanation of effects
      The nanopores of the solid materials disclosed in References 1 and 2 physically exhibit selectivity, and thus precision of the size is important.
         Therefore, pore clogging is a serious problem.
      In contrast, the selectivity for substances to pass is chemically exhibited by the chemical properties, such as the electric charge, of the surface of the substance "gel" defined in the invention of the present application after the amendments. Accordingly, the size of "pores" cannot be precisely defined. Since the size of pores is not limited, there are no problems of pore clogging due to the size effects, and separation and the like can be efficiently carried out.
   1-4) References 3 and 6
      The disclosures of References 3 and 6 cited in the examination on the inventive step of claims 1 to 32 do not require any change in the discussion above.

2. Conclusion
 As explained above, the applicant believes that the amended independent claims 1, 23, and 31 and all dependent claims that refer to the independent claims have novelty and an inventive step at least over the references.
